Europäisches Patentamt

European Patent Office

Office européen des brevets

(11) Publication number: 0 489 713 A2

# EUROPEAN PATENT APPLICATION

(21) Application number: **92102048.3**

(22) Date of filing: **28.05.85**

(51) Int. Cl.5: **H04N 7/12**

This application was filed on 07 - 02 - 1992 as a divisional application to the application mentioned under INID code 60.

(30) Priority: **29.05.84 US 615091**
**29.05.84 US 615092**
**29.05.84 US 615093**
**29.05.84 US 615094**

(43) Date of publication of application:
**10.06.92 Bulletin 92/24**

(60) Publication number of the earlier application in accordance with Art.76 EPC: **0 163 512**

(84) Designated Contracting States:
**DE FR GB IT**

(71) Applicant: **GENERAL ELECTRIC COMPANY**

1 River Road
Schenectady, NY 12345(US)

(72) Inventor: **Reitmeier, Glenn Arthur**
3 Metekunk Drive
Trenton, New Jersey(US)
Inventor: **Carlson, Curtis Raymond**
306 Ridgeview Road
Princeton, New Jersey(US)
Inventor: **Strolle, Christopher Hugh**
275 Bickley road
Glenside, Pennsylvania(US)

(74) Representative: **Pratt, Richard Wilson**
**London Patent Operation G.E. TECHNICAL**
**SERVICES CO. INC. Burdett House 15/16**
**Buckingham Street**
**London WC2N 6DU(GB)**

(54) Spatial-temporal frequency interleaved processing of a television signal.

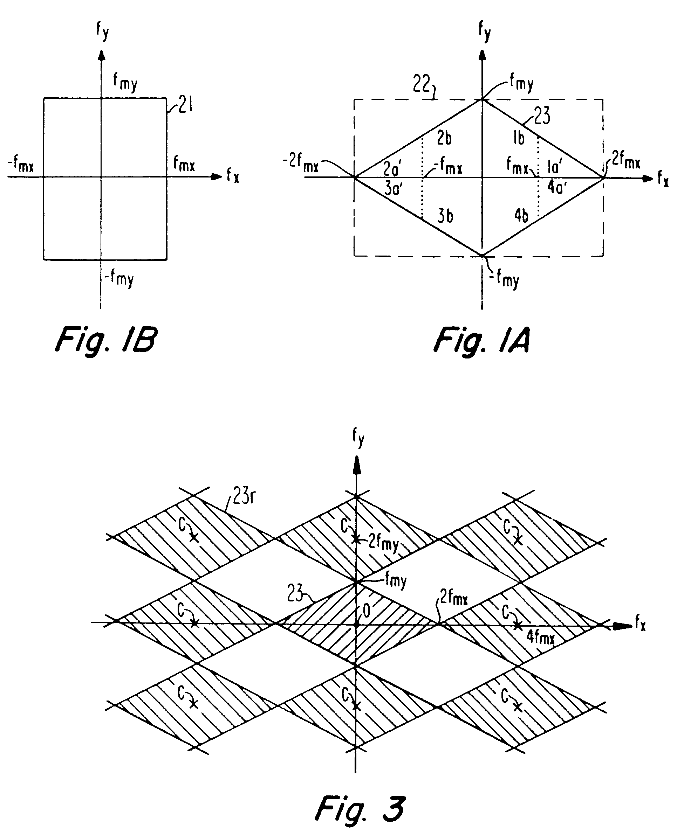

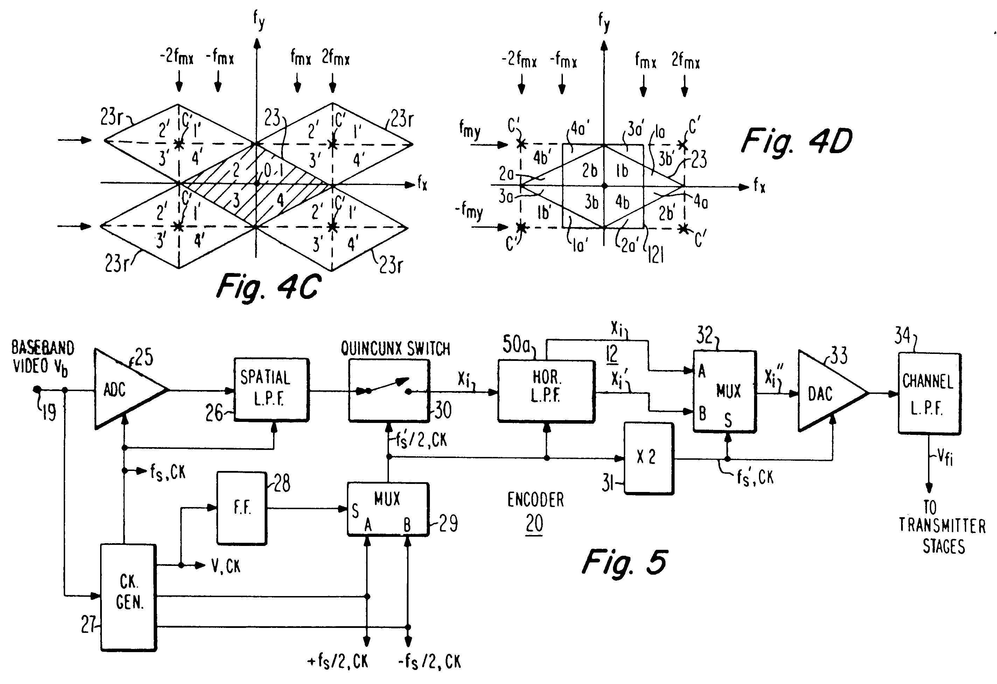

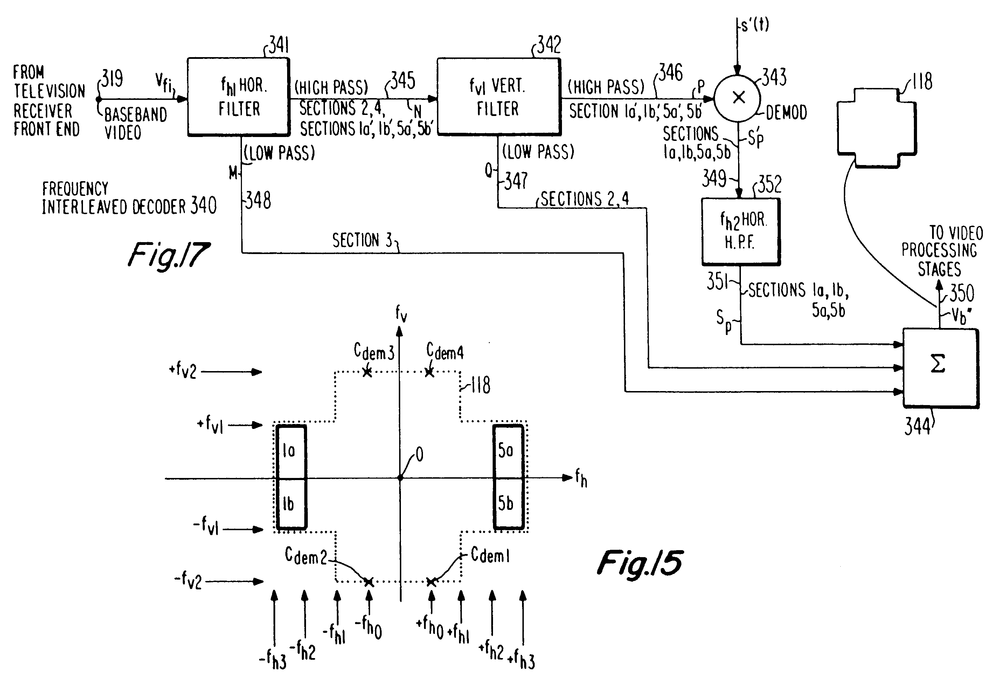

(57) To enable the high spatial frequency content of a video signal to be transmitted and received by way of a bandwidth limited channel, the spatial frequency spectrum of the image contained in the video signal is reconfigured by interleaving. Spatial repeat spectra (1a'-4a' Fig. 4D; 1a',1b',5a',5b', Fig. 14B) of at least portions (1a-4a ; 1a,1b,5a,5b) of the image spectrum are created at complementary interleaved positions adjacent the image spectrum (23,118), from which positions the original contents of the image spectrum have been removed. These portions of the image spectrum to which the repeat spectra correspond are also removed, so that the final signal includes only a selected reduced bandwidth, portion of the original image spectrum with the repeat spectra interleaved therewith.

Fig. 4C

Fig. 4D

This invention relates to spatial-temporal frequency interleaving of a video signal.

A desirable objective of high definition television is a picture that is sharper and more pleasing than is provided by broadcast and television receiver equipment presently in general use. Some of the features proposed for a high definition television system include the following: increasing the line rate over the conventional 525 or 625 lines per frame to, for example, 1,050 or 1,250 lines per frame; extending the aspect ratio from a conventional 4:3 aspect ratio to an aspect ratio such as 5:3; and increasing the effective resolution of the picture.

A high definition television system that attempts to provide most or all of these features has heretofore required either a substantial increase in bandwidth of the transmission channel or a substantial compromise in the specifications for one or more of the features described above. In accordance with an aspect of the invention, spatial-temporal frequency interleaving techniques are used to rearrange the spatial-temporal frequency spectrum of the image in such a way as to reduce the channel bandwidth requirement for transmission of the image without substantially reducing the desired information content of the image.

The concept of spatial-temporal frequency interleaving involves the separation of high spatial and/or temporal frequency information of an image and modulating this information on a spatial-temporal carrier which interleaves the high frequency information with the low frequency information of the baseband spectrum. An advantage of interleaving high frequency information is that since the eye is relatively insensitive to distortion at high spatial frequencies, artifacts introduced by the interleaving will, in general, not be objectionable.

When the high definition television signal processing system incorporates sampling techniques, high frequency carriers are inherently introduced in the form of spectral repeat centers by means of the sampling procedure. As a feature of the invention, great flexibility is available in selecting the carriers or repeat centers at particular points in the spatial-temporal frequency volume. The effect of using spatial-temporal carrier generation is to reconfigure the spectrum of the image, transmitting a portion of the baseband spectrum in a different location of the spatial-temporal frequency volume.

In accordance with an aspect of the invention, a video signal is developed that contains an image having associated therewith a spatial-temporal frequency spectrum of at least two dimensions. A modulated signal is produced that represents spatial-temporal carrier modulation by the image contained in the video signal to generate repeat spectra of at least a section of the image spectrum.

The carrier modulation is designed to position a repeat spectrum adjacent to the image spectrum, such that a section of the adjacent repeat spectrum is interleaved in a complementary location adjacent the image spectrum. The video signal is filtered prior to the production of the modulated signal to remove spectral contents of the image that are positioned at the complementary location adjacent that portion of the image spectrum that is to be transmitted. Thus, for example, if the image spectrum includes a temporal dimension, scene motion artifacts are avoided that are due to interaction between the frequency interleaved sections and the temporal content of the original image spectrum.

In accordance with another aspect of the invention, to reconstruct the spatial-temporal spectrum of the frequency interleaved video signal, a first signal is produced that represents spatial-temporal carrier modulation of the spatial-temporal frequency spectrum of the frequency interleaved signal and that contains the removed section of the image spectrum restored to its original location. The first signal is filtered to remove from its spectrum undesirable portions of repeat spectra. A second signal is developed from the filtered signal that contains the reconstructed image spectrum.

As will be described, the carrier modulation tends to introduce a full-strength alias which could result in undesirable artifacts being displayed together with the picture information. These effects may be substantially reduced by transmitting the interleaved spectral section with diminished amplitude relative to a remaining spectral section of the transmitted video signal. At the receiver, a complementary process is performed that represents spatial-temporal carrier modulation of the spatial-temporal frequency interleaved video signal. The interleaved section is restored to its original position in the image spectrum, while at the same time, its amplitude is increased.

When a high-definition television signal processing system incorporates sampling techniques, high frequency carriers are inherently introduced in the form of spectral repeat centers by means of the sampling procedure. When analog processing circuitry is used, spatial repeat spectra may be introduced, for example, by modulating an appropriately selected carrier wave with the video signal.

Great flexibility is available in selecting the spatial-temporal carriers that generate repeat centers at particular points in the spatial-temporal frequency volume. The effect of using spatial-temporal carrier generation is to reconfigure the spectrum of the image, transmitting a portion of the baseband spectrum in a different location of the spatial-temporal frequency volume. In an embodiment of the invention, the baseband spatial-temporal frequency spectrum of the video signal is configured so as to enable rectangular sections of the spectrum to be interleaved. The baseband frequency spectrum used may, for instance, be a cruciform-shaped region.Such a spectrum is capable of providing improved horizontal and vertical resolution at the expense of diagonal resolution. This type of trade off may produce a more pleasing picture, taking into account the physiology of the eye and the perception of images by the visual system. Additional advantages ensue if one extracts from the baseband video spectrum for the purpose of frequency interleaving, a spectral section of such shape and orientation as to enable the sides of the section to be oriented parallel to the horizontal and vertical directions.

In general, spatial-temporal frequency interleaving techniques substitute one piece of spatial information, such as information contained in the high horizontal frequencies, in place of another piece of information, such as information contained in diagonal frequencies, both of which are relatively high frequency spatial information. In accordance with another aspect of the invention, different pieces of spatial information, such as diagonal and high horizontal frequency information, are advantageously transmitted to the receiver by alternating or temporally multiplexing transmission of the pieces of information at a given rate such as at the frame rate. Thus, the video signal of an image containing diagonal frequency information is transmitted in one frame, while the video signal of an image containing high horizontal frequency information is transmitted in the alternate frame. Assuming a frame rate of 30 Hertz, the visual artifacts introduced into such a transmission system is a half-frame rate, 15 Hertz flicker.

In the accompanying drawings:

FIGURES 1A, 1B, 2A, 2B, 3, 4A through 4D illustrate spatial frequency spectra at various points in the frequency interleaving process;

FIGURE 5 illustrates a spatial-temporal frequency interleaving encoder, embodying the invention;

FIGURE 6 illustrates a spatial-temporal frequency interleaving decoder, embodying the invention;

FIGURE 7 illustrates a specific embodiment of the horizontal low pass filter of FIGURE 5;

FIGURE 8 illustrates a spatial quincunx switching arrangement useful in explaining the analogy between sampling of a signal and carrier modulation by a signal; and

FIGURE 9A illustrates a signal modulated carrier and sampling points thereon.

FIGURE 9B illustrates the frequency spectrum of the signal modulated carrier of FIGURE 9A;

FIGURE 10A illustrates a signal modulated carrier with sample points thereon wherein alternate samples of the signal modulated carrier are of reduced amplitude, in accordance with an aspect of the invention;

FIGURE 10b illustrates the frequency spectrum of the signal modulated carrier of FIGURE 10A;

FIGURE 11 illustrates a spatial-temporal frequency interleaving encoder, embodying the invention, wherein the interleaved section is of reduced amplitude;

FIGURE 12 illustrates a spatial-temporal frequency interleaved decoder, embodying the invention, wherein the frequency interleaved section is restored to its original position in the image spectrum while at the same time having its amplitude increased.

FIGURE 13 illustrates a specific embodiment of the interpolator of FIGURE 11;

FIGURES 14A-14D and 15 illustrate spatial frequency spectra at various points in the frequency interleaving and reconstructing processes according to another aspect of the invention;

FIGURE 16 illustrates a spatial-temporal frequency interleaving encoder for this latter aspect of the invention;

FIGURE 17 illustrates a decoder for a spatial-temporal frequency interleaved video signal such as provided by the FIGURE 16 encoder;

FIGURE 18 illustrates a time multiplexing, spatial-temporal frequency interleaving encoder for another aspect of the invention;

FIGURES 19-21 illustrates respective time-multiplexing, spatial -temporal frequency interleaving decoders; and

FIGURES 22-24 illustrate spatial frequency spectra at various points in the frequency interleaving and reconstructing processes of the encoder and decoders of FIGURES 18-21.

By way of illustration only, assume that it is desired to reconfigure the transmitted luminance spatial frequency spectrum of an image so that the spectrum better matches the properties of the human visual system. For the purposes of this discussion only, assume that the original baseband spatial frequency spectrum, $f_x$ versus $f_y$, of a video signal is rectangular, as illustrated in FIGURE 1A, by rectangle 22, where $f_x$ is measured in cycles per picture width and $f_y$ is measured in cycles per picture height.

One of the factors determining the maximum horizontal spatial resolution transmitted is the bandwidth of the channel allocated to carry the video signal. Channel bandwidth is therefore an important factor in determining the maximum horizontal spatial frequency, $f_{mx}$, of the image being transmitted. Vertical resolution as measured by the maximum vertical spatial frequency $f_{my}$ is a function of the number of lines scanned per frame. Thus, in a conventional transmission system, only the spatial frequency spectrum bounded by rectangle 21 of FIGURE 1B is transmitted.

Experiments have indicated, however, that the human visual response to spatial frequencies is limited to be within a diamond shaped area as suggested by the spatial frequency spectrum 23 of FIGURE 1A. The diamond shaped area 23 of FIGURE 1A has the same Nyquist area as the rectangular shaped area 21 of FIGURE 1B. Thus, an improvement in the displayed image quality may be realized by decreasing the diagonal resolution available in the frequency spectrum of FIGURE 1B in exchange for increasing either vertical or horizontal resolution. In FIGURE 1A, the increased resolution is in the horizontal direction. The horizontal spatial frequencies in diamond shaped spectrum 23 of FIGURE 1A extend out to a frequency $2f_{mx}$,twice the maximum spatial frequency in the horizontal direction of the spectrum of FIGURE 1B.

In accordance with an aspect of the invention, by means of spatial frequency interleaving, a signal having a spectrum like that of area 23 of FIGURE 1A may be transmitted through the same narrowband transmission channel used to transmit a signal having a spectrum like that of FIGURE 1B.

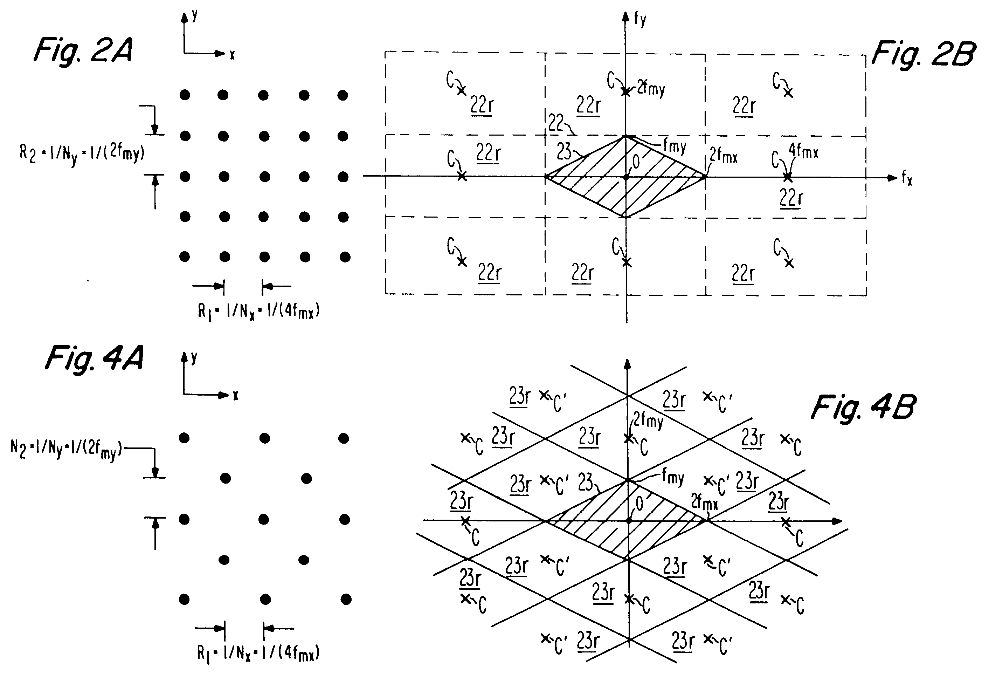

Before frequency interleaving is attempted so as to permit the transmission of an image containing $2f_{mx}$ horizontal resolution, the signal is diagonally filtered to change the spatial frequency spectrum of the signal from that of dashed-line rectangle 22 to that of diamond-shaped area 23. To simplify the hardware, the filtering may be performed digitally. First, the image is sampled in the horizontal direction according to the orthogonal sampling point grid of the x-y image space of FIGURE 2A, with sampling points being indicated by the solid dots. In accordance with Nyquist's theorem, to preserve the original $2f_{mx}$ resolution in the horizontal direction, the image is sampled in the horizontal direction at twice the maximum horizontal spatial frequency that occurs in the image. Thus, if $N_x$ represents the number of samples per picture width, then to satisfy Nyquist's criteria,$N_x = 1/(4f_{mx})$. The period $R_1$ between horizontal samples of the orthogonal sampling grid of FIGURE 2A is $R_1 = 1/N_x = 1/(4f_{mx})$. The period $R_2$ between vertical samples of FIGURE 2A is $R_2 = 1/N_y = 1/(2f_{my})$, where the value of $N_y$ equals the number of lines per picture height.

The two-dimensional orthogonal sampling procedure schematically illustrated by the sampling point grid of FIGURE 2A gives rise to a plurality of rectangular repeat spectra 22r in the spatial frequency domain, as illustrated in FIGURE 2B. The repeat spectra 22r have repeat centers C that form an orthogonal grid with frequency spacing in the horizontal direction of $4f_{mx}$ and in the vertical direction, of $2f_{my}$. Each of the repeat spectra 22r ideally contains substantially the same picture information as contained in the baseband spectrum 22 that is centered about the origin O.

The sampled signal is then two-dimensionally digitally filtered to filter the baseband spectrum into the diamond-shaped area 23 and to filter the repeat spectra into diamond-shaped areas 23r, as indicated by all the shaded areas of FIGURE 3.

The next step in the frequency interleaving process is the appropriate sampling of the signal to create additional repeat spectra in the void areas adjacent the baseband spectrum 23 of FIGURE 3. By choosing quincunx subsampling, one may locate additional repeat spectra in a complementary and nonoverlapping manner with respect to the existing diamond-shaped baseband spectrum 23 and diamond-shaped repeat spectra 23r of FIGURE 3. One type of quincunx subsampling is the field quincunx sampling procedure illustrated by the sampling point grid of FIGURE 4A. Other quincunx subsampling such as line and frame quincunx subsampling may be used.

In field quincunx subsampling, alternate ones of the original pixels are discarded on a line-interleaved basis. The sampling point grid that results is illustrated in FIGURE 4A and forms a non-orthogonal quincunx, or figure-of-five pattern. The field quincunx subsampling may be achieved by subsampling interlaced video lines at half the original horizontal sampling rate and by additionally altering the phase of the sampling clock on a field-by-field basis, as will be later explained during the discussion of hardware implementation.

The effect of field quincunx subsampling in the frequency domain is illustrated in FIGURE 4B. Additional repeat spectra 23r are introduced having repeat centers C' such that the origin O or any one of the repeat centers C or C', together with the corresponding 4 adjacent repeat centers, form a figure-of-five pattern. The shape of the additional repeat spectra 23r is identical to the shape of baseband spectrum 23. The repeat center C' is spaced apart from another center C' by an amount $4f_{mx}$ in the horizontal direction and $2f_{my}$ in the vertical direction.

FIGURE 4C illustrates a portion of the frequency space of FIGURE 4B that includes only those repeat spectra 23r that are adjacent to baseband spectrum 23 and are centered on repeat centers C'. In FIGURE 4C, one may partition the baseband frequency spectrum 23 into four sections, 1, 2, 3, 4. Corrresponding sections, containing identical image and spatial frequency content but centered around a repeat center C', are identified as sections 1', 2' 3', 4'.

In accordance with an aspect of the invention, after subsampling has been performed, the signal is postfiltered to keep the spatial frequencies of the signal within the limits required for transmission through a limited bandwidth channel. Assume, illustratively, that for various reasons, including limited channel bandwidth, it is desirable to transmit a signal having associated therewith spatial frequencies no greater than $f_{mx}$. Thus, for example, when using field quincunx subsampling on a signal that has a diamond-shaped baseband area 23 of FIGURE 4B, wherein the signal has horizontal spatial frequencies extending to a maximum frequency of $\pm 2f_{mx}$, postfiltering of the quincunx subsampled signal is performed to limit the extent of the horizontal spatial frequencies to a maximum of $\pm f_{mx}$. Postfiltering need not be performed to remove repeat spectra associated with repeat centers having locations on the vertical axis $f_y$, since the scanning processes at the camera and the television receiver combine to attenuate such spectra. For simplicity such repeat spectra are not illustrated in FIGURE 4D.

The resultant transmitted spatial frequency spectrum after post-filtering has the rectangular shape of solid line rectangle 121 of FIGURE 4D, with a horizontal cutoff at the frequency $f_{mx}$ and a vertical cutoff at the frequency $f_{my}$. The total Nyquist area bounded by the solid-line rectangle 121 of FIGURE 4D is the same as the total Nyquist area of the baseband diamond-shaped spectrum 23.

In addition, because of spatial frequency interleaving, the image content of the entire baseband spectrum 23 has been preserved in rectangular shaped spectrum 121 of FIGURE 4D without loss of any baseband frequency information. The baseband information for frequencies extending beyond $f_{mx}$, originally located in triangular sections 1a, 2a, 3a and 4a of diamond-shaped baseband spectrum 23 of FIGURE 4D, have been repositioned into the corners of rectangular frequency spectrum 121 as the corresponding triangular sections 1a', 2a', 3a' and 4a' of the repeat spectra associated with the four adjacent centers C'.

In FIGURE 4D, frequency sections 1a, 2a, 3a, 4a, of baseband spectrum 23 have been removed due to the low frequency cutoff $f_{mx}$ produced by postfiltering of the quincunx subsampled signal. However, as a result of quincuinx subsampling, complementary sections 1a', 2a', 3a', 4a', of respective adjacent repeat spectra have been substituted or interleaved with remaining sections 1b, 2b, 3b, 4b, of baseband spectrum 23.

One notes that a feature of the inventive frequency interleaving technique just described is the ability of a limited bandwidth channel to transmit high spatial frequency content information by rearranging the original spectrum to fill up the entire Nyquist area of the transmitted signal.

At the receiver, the original baseband spectrum, such as the diamond-shaped baseband spectrum 23 of FIGURE 1A, may be reconstructed from a signal having a spatial frequency spectrum such as rectangular spectrum 121 of FIGURE 4D, by means of a complementary quincunx subsampling process, as will be described later.

FIGURE 5 illustrates an encoder 20 which implements the spatial-temporal frequency interleaving technique previously described. In FIGURE 5, a two-to-one interlaced baseband video signal $V_b$, such as the luminance signal component, by way of example, in a time division multiplexed component format, such as a conventional multiplexed analog component or MAC format prior to compression, is developed at a terminal 19. The baseband video signal may be obtained from conventional camera and studio hardware, not illustrated, and has a spatial frequency spectrum of a rectangular shape such as spectrum 22 of FIGURE 1A, with horizontal frequencies extending to a frequency $2f_{mx}$ and vertical frequencies extending to $f_{my}$. Repeat spectra existing due to the scanning process and having repeat centers on the $f_y$ axis are not illustrated as they are of no importance for the purposes of this discussion.

Baseband video signal $V_b$ is applied to a clock generator 27 that generates clock signals for frequency interleaving encoder 20 that is synchronized with the synchronizing information in the baseband video signal. Clock generator 27 generates a clock signal V,ck at the field rate of the baseband video signal and generates several sampling and subsampling clocks for the various digital sections of encoder 20.

Baseband video signal $V_b$ is also applied to an analog-to-digital converter, ADC 25, for sampling the signal at a sampling rate $f_s$ in response to a clock signal $f_s$,ck developed by clock generator 27. The sampling rate $f_s$ is selected so as to produce sample points in the sampling grid of FIGURE 2A that are spaced apart by the distance $R_1$. Thus, the frequency spectrum of the digitized video signal at the output of ADC 25 is that of the one shown in FIGURE 2B with a baseband rectangular spectrum 22 and replicated rectangular spectrums 22r centered on the repeat centers C.

The digitized and sampled video signal is then applied to a spatial low pass filter 26 that filters baseband spectrum 22 into diamond-shaped baseband area 23 of FIGURE 3 and filters repeat spectra 22r into diamond-shaped repeat spectra 23r. Spatial low pass filter 26 may be any one of several conventional type digital filters such as a maximally flat filter of order N. The higher the order of the filter, the sharper the frequency cutoff characteristics of the filter. However, the higher the order of the filter, the more complex is the hardware required to implement the filter. On the other hand, sharp cutoff spatial filters may introduce perceptually undesirable sidelobes into the image space of the transformed spatial frequency impulse response functions. The filter also incorporates a field store to enable the filter to process adjacent lines of the interlaced signal. If a non-interlaced signal were to be processed, then the filter would not require a full-field store.

After the signal has been filtered into diamond-shaped baseband and repeat spectra, the signal is reconfigured in its spatial frequencies to satisfy the bandwidth requirements imposed upon it by the transmission channel used. For example, assume the bandwidth of the channel that receives the frequency interleaved signal from the output of encoder 20 has a limited bandwidth that enables the transmission of horizontal spatial frequencies only up to a maximum frequency of $f_{mx}$. A field quincunx sampling technique such as described previously may be used to reconfigure the baseband frequency spectrum 23 of FIGURE 4C to a rectangular frequency spectrum 121 of FIGURE 4D.

To accomplish this reconfiguration, the output of spatial low pass filter 26 of FIGURE 5 is applied to a switch 30 that produces field quincunx subsampling of the video signal in the sampling pattern illustrated in FIGURE 4A. Switch 30 passes every other input sample from low pass filter 26 on a phase alternating, line-by-line basis, in response to the application of the half rate sampling clock signal $f'_s/2$,ck.

The signal $f'_s/2$,ck is generated by selecting alternately, on a field-by-field basis, one of two available clock signals $+f_s/2$,ck and $-f_s/2$,ck developed by clock generator 27. The two clock signals, $\pm f_s/2$,ck, are 180° out-of-phase with each other and are synchronized with and have one-half the frequency of the sampling clock signal $f_s$,ck of ADC 25.

To produce the correct switching of quincunx switch 30, the signal V,ck toggles a T-type flip-flop 28 to develop on a field alternating basis high and low states at the output of the flip-flop. The output of flip-flop 28 is coupled to the select input terminal S of a multiplexer MUX 29. The signal $+f_s/2$,ck is applied to the A input and the signal $-f_s/2$,ck is applied to the B input. The output of MUX 29 is the clocking signal $f'_s/2$,ck needed to produce the quincunx subsampling operation of switch 30.

Because of quincunx subsampling, the spectrum of the sampled video signal samples $x_i$, at the output of switch 30, is the one shown in FIGURE 4B, having a diamond-shaped baseband spectrum 23 together with repeat spectra 23r located not only around repeat centers C' but also around repeat centers C. To obtain the rectangular spectrum 121 of FIGURE 4D with a reduced horizontal cutoff frequency of $f_{mx}$, the video samples $x_i$ are applied to an interpolator 12 that includes a horizontal low pass filter 50a. Filter 50a produces interpolated subsamples $x'_i$ at the $f_s/2$ rate. At a suitable tap in filter 50a, the unprocessed video samples $x_i$ are brought out of the filter.

Samples $x_i$ are applied to the A input of a multiplexer MUX 32 of interpolator 12. Interpolated samples $x'_i$ are applied to the B input. The A or B inputs to MUX 32 are clocked out of the multiplexer in response to a selection clock signal $f'_s$,ck applied to a select terminal S. The $f'_s$,ck is developed from the $f'_s/2$,ck by frequency doubling in a doubler section 31. The use of the clock signal $f'_s$,ck preserves the line-by-line phase alternation required by the quincunx subsampling procedure.

The video samples $x''_i$ developed at the output of MUX 32 has the frequency interleaved baseband spectrum of rectangular baseband spectrum 121 illustrated in FIGURE 4D. All the picture information of the original signal samples developed at the output of spatial low pass filter 26 is contained in the frequency interleaved spectral signal of samples $x''_i$, but rearranged so as to accommodate the narrowband transmission requirements.

The digital video samples $x''_i$ are applied to a digital-to-analog converter DAC 33 to generate an analog video signal having the rectangular baseband spectrum 121 of FIGURE 4B. This signal is then passed through a channel low pass filter 34 to develop the frequency interleaved baseband video signal $V_{fi}$, prior to being sent to the transmitter stage, for transmission by way of broadcast, cable or other suitable transmission media. Channel low pass filter 34 has a horizontal spatial frequency cutoff of $f_{mx}$ to match the transmitter channel bandwidth limitations. Filter 34 may be a separate filter or may schematically represent the overall filtering effect of the limited bandwidth transmission channel selected. Not illustrated in FIGURE 5 or in the later FIGURES showing other forms of encoder, are the additional, conventional stages of MAC processing that compress the luminance signal and combines it with the compressed chrominance signal, the reference burst or other timing signal and the pulse code modulated portion to obtain a MAC formatted signal.

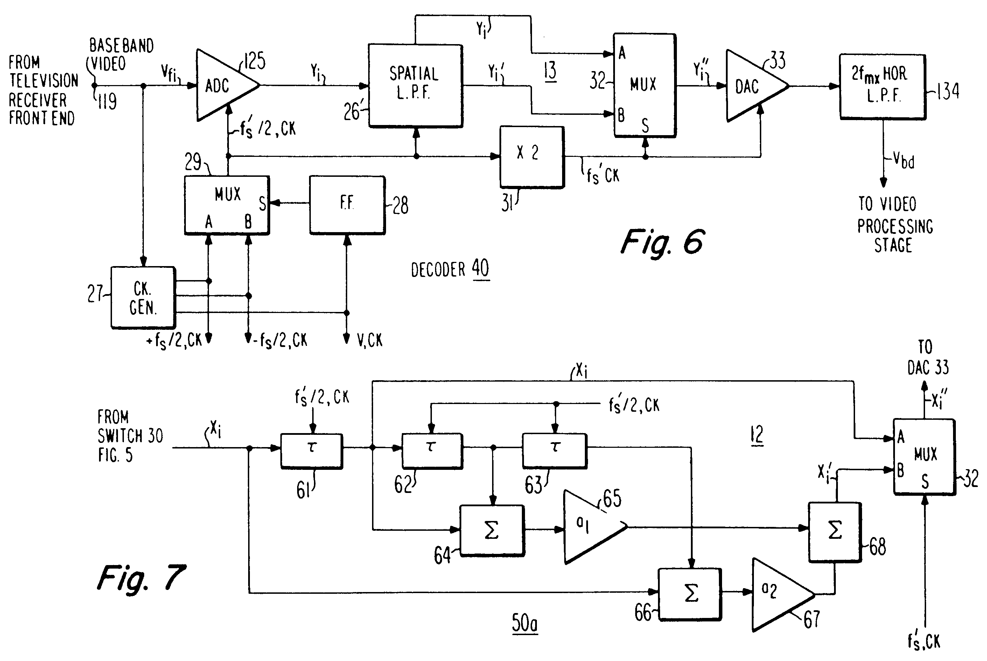

FIGURE 7 illustrates interpolator 12 of FIGURE 5 including a detailed embodiment of horizontal low pass filter 50a. A three-stage delay line comprises delay elements 61, 62 and 63. Each of the delay elements is clocked by the $f'_s/2$,ck. The quincunx sample $x_i$ is applied to the first delay element 61 and to an input of an adder 66. The output of the third delay element 63 is applied to the other input of adder 66. The output of adder 66 is weighted by a coefficient multiplier 67 having a weighting coeffi-

cient value of $a_2$. The output of coefficient multiplier 67 is coupled to an input of a summer 68. The output of delay element 62 is applied to one input of an adder 64 and the output of delay element 61 is applied to the other input of the adder. The output of adder 64 is applied to a coefficient multiplier 65 having a weighting coefficient value of $a_1$. The output of coefficient multiplier 65 is applied to the other input of adder 68.

The output of adder 68 is the interpolated sample $x'_i$ that is applied to the B input of MUX 32. The output of delay stage 61 is the unprocessed sample $x_i$ which is applied to the A input of multiplexer 32. The output sample $x''_i$ of multiplexer 32 comprises alternating real and interpolated samples. Filter 50a, therefore, provides an interpolated sample $x'_i$ that is an interpolation of the preceding and succeeding two real samples $x_i$.

FIGURE 6 illustrates a decoder 40 in the television receiver that will reconstruct the diamond-shaped baseband spectrum 23 of FIGURE 1B from the frequency interleaved baseband video signal $V_{fi}$ producedby frequency interleaving encoder 20 of FIGURE 5. After the transmitted video signal has been received by the television receiver and processed by the front end stages, such as the tuner and IF stages, assuming transmission by way of an RF modulated broadcast carrier, and has been demultiplexed and decompressed in a MAC processor, the baseband frequency interleaved video signal $V_{fi}$ is developed at a terminal 119 of FIGURE 6. Items of FIGURES 5 and 6 that are similarly identified function in a similar manner or represent similar quantities.

As the first step in reconstructing the diamond shaped baseband spectrum, the frequency interleaved video signal $V_{fi}$ is quincunx subsampled at the half sampling rate of $f_s/2$, in order to generate signal samples $y_i$. Due to quincunx subsampling, the frequency spectrum of the signal samples $y_i$ is that of the frequency spectrum of FIGURE 4B. To perform the quincunx subsampling, while at the same time digitizing analog signal $V_{fi}$, an analog-to-digital converter ADC 125 receives frequency interleaved signal $V_{fi}$ and subsamples it in a quincunx manner in accordance with the clocking signal $f'_s/2,ck$ being provided by multiplexer MUX 29.

The subsampled signal $y_i$ is applied to an interpolator 13 that includes a spatial low pass filter 26'. The function of spatial low pass filter 26' is to filter the signal samples $y_i$ to remove all the repeat spectra 23r of FIGURE 4B that are located about the repeat centers C'. Samples $y'_i$ at the output of spatial low pass filter 26' are coupled to the B input of a multiplexer MUX 32. The unprocessed samples $y_i$ are coupled to the A input. Digital samples $y''_i$ are developed at an $f_s$ rate at the output of MUX 32. Digital samples $y''_i$ alternate between

unprocessed samples $y_i$ and interpolated samples $y'_i$ and contain the spatial frequency spectrum of FIGURE 3.

To convert samples $y''_i$ into an analog video signal, the samples are applied to digital-to-analog converter 33 that is clocked by the field-by-field, phase alternating signal $f'_s,ck$. A low pass filter 134 has a horizontal spatial frequency cutoff of $2f_{mx}$ to remove repeat spectra having horizontal frequencies that are greater in magnitude than $2f_{mx}$. The output of low pass filter 134 provides a reconstructed baseband video signal, $V_{bd}$, having the diamond-shaped baseband spectrum 23 of FIGURE 1A. The signal $V_{bd}$ also contains repeat spectra, not illustrated in FIGURE 1A, that are positioned on the vertical axis $f_y$. These vertical repeat spectra are of no importance for the purposes of this discussion, as they are attenuated by the scanning process in the television receiver.

Filter 26 of FIGURE 5 and filter 26' of FIGURE 6 perform analogous functions in frequency interleaving encoder 20 and frequency reconstructing decoder 40, respectively. Each of the two filters takes its respective signal samples and processes them to generate signal samples having diamond-shaped spectra. Thus, spatial low pass filters 26 and 26' may be similarly constructed, taking into account the fact that the input sample rate for filter 26 is twice that for filter 26'.

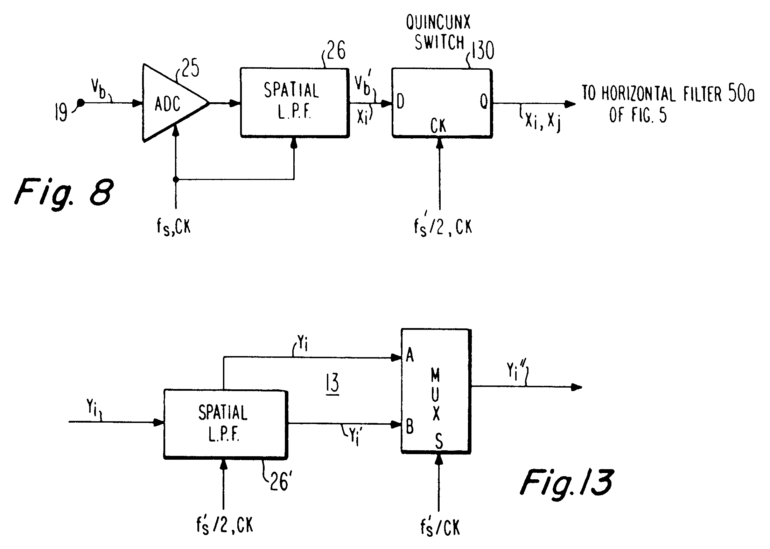

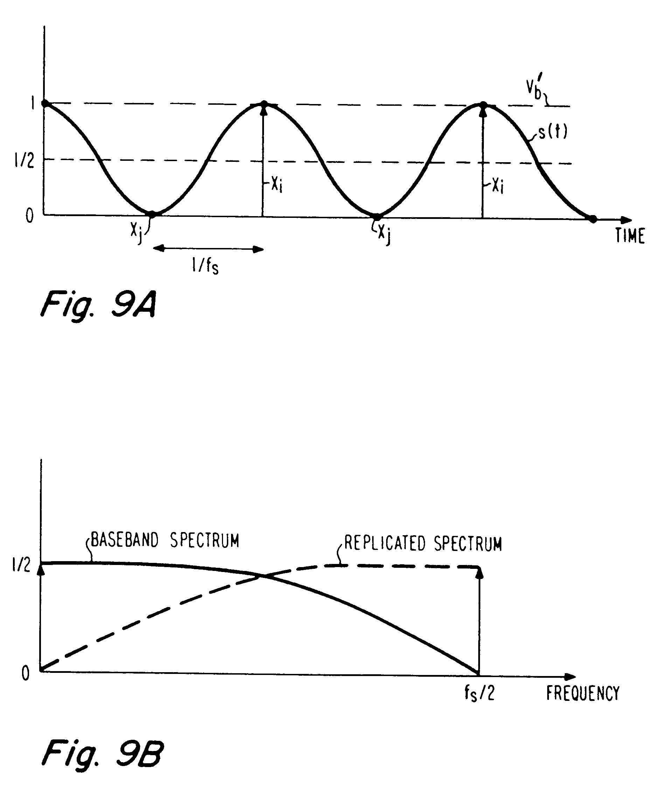

The use of sampling for frequency interleaving a high definition television signal is comparable in analog processing to modulating the signal on a carrier in order to interleave the high spatial frequency information with the low spatial frequency information. Assume that the quincunx subsampling of the digitized video signal $V_b$ ofFIGURE 5 is arranged so as to force every other digital sample to zero at the output of quincunx switch 30. FIGURE 8 illustrates a portion of the system of FIGURE 5 having such quincunx switching, including a D-type flip flop 130. FIGURE 9 illustrates real samples $x_i$ of the video signal $V'_b$, where the signal $V_b'$ is the analog equivalent of the digitized video signal after spatial low pass filtering by filter 26 of FIGURE 8. The samples $x_j$ of FIGURE 9 represent alternate samples that were forced to zero by the operation of D- type flip-flop 130 of FIGURE 8.

In FIGURE 9, a carrier signal s(t) may be drawn that has maxima and minima corresponding to the values of the samples $x_i$ and $x_j$, respectively. Thus, from FIGURE 9 one may conclude that the subsampling procedure is equivalent to multiplying the video signal $V'_b$ by the carrier signal

$$s(t) = 1/2 + 1/2 \cos(\pi f_s t).$$

The sampling or equivalent carrier modulation tends to introduce a full-strength alias described below which could result in undesirable artifacts being displayed together with the picture information. As previously indicated, the effects of aliasing can be substantially reduced by transmitting the interleaved spectral section with diminished amplitude relative to a remaining spectral section of the transmitted video signal. At the receiver, a complementary process is performed that represents spatial-temporal carrier modulation of the spatial-temporal frequency interleaved video signal. The interleaved section is restored to its original position in the image spectrum, while, at the same time, its amplitude is increased.

To explain the origin of the aliasing, one notes that the frequency spectrum of the video modulated carrier signal $V_b' .s(t)$ of FIGURE 9A is similar to the one illustrated in FIGURE 9B. The spectrum includes the solid line baseband spectrum out to the frequency $f_s/2$ and a dashed-line replicated spectrum illustratively having maximum amplitude at the frequency $f_s/2$ and decreasing toward zero as the origin is approached.

One observes that in FIGURE 9B, the replicated spectrum is at full amplitude compared to the baseband spectrum. To avoid the introduction of objectionable artifacts in the displayed picture, it is desirable to reduce the amplitude of the replicated spectrum relative to the baseband spectrum.

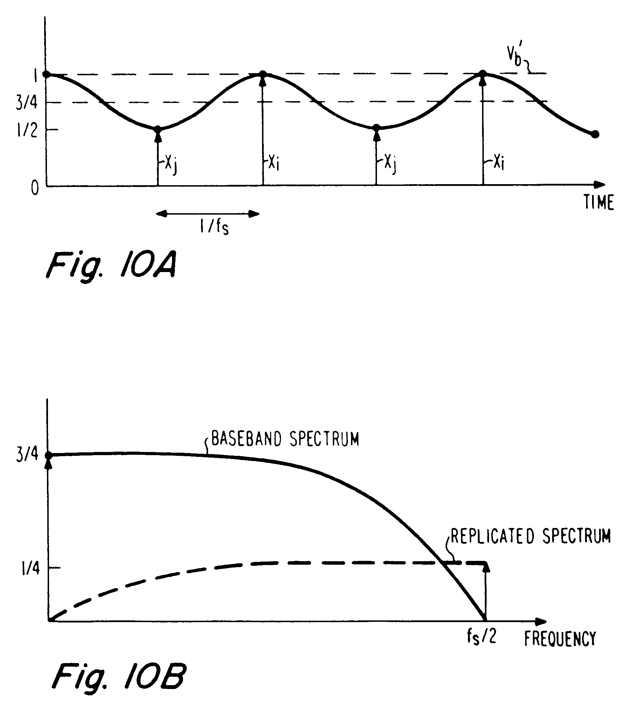

To reduce the amplitude of the replicated spectrum, the signal $V'_b$ is sampled at the $f_s$ rate and the value of every other sample is reduced below its unity value, but to a nonzero value. As illustrated in FIGURE 10A, the original samples $x_i$ retain their original unity values; the alternate samples $x_j$ are of reduced value.

The effect of reducing the value of samples $x_j$ is the equivalent of carrier modulating the signal $V'_b$ by the signal

$$s'(t) = (1-c) + (c)\cos(\pi f_s t),$$

where c is greater than zero but less than 1. For illustrative purposes, c = 1/4 in FIGURE 10A.

The spectrum of the carrier modulated signal $V'_b \bullet s(t)$ is illustrated in FIGURE 10B and includes the original baseband spectrum and a replicated spectrum that is substantially reduced in amplitude compared to the baseband spectrum. For the example of c = 1/4 the replicated spectrum is reduced to 1/3 the amplitude of the baseband spectrum, thereby reducing the noticeability of any artifacts caused by aliasing.

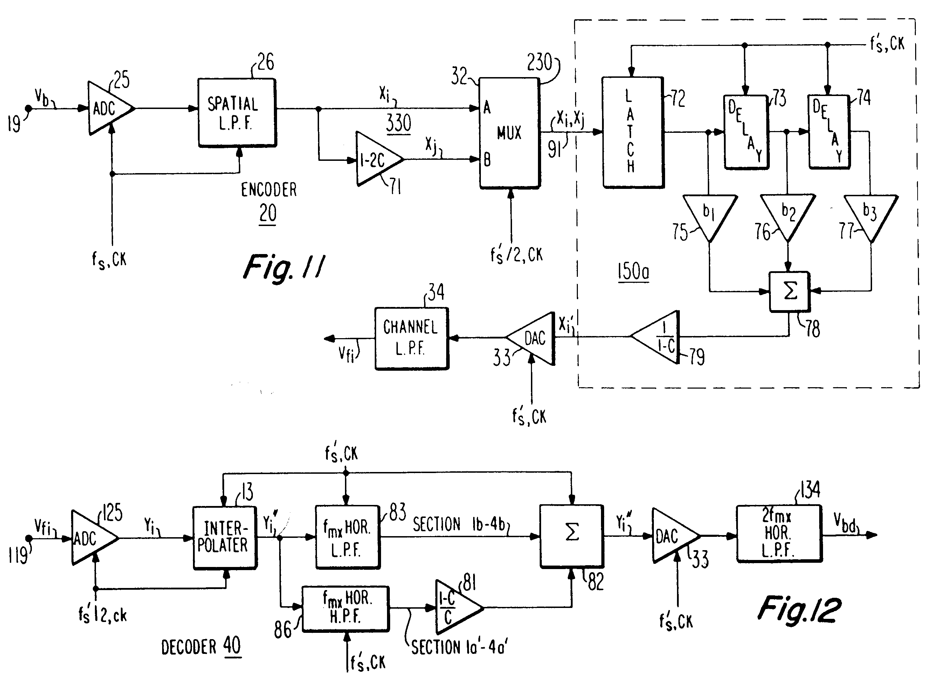

FIGURE 11 illustrates an encoder 20' which implements the spatial-temporal frequency interleaving technique previously described, including a reduced amplitude carrier quincunx switching stage 330. Items in FIGURE 5 and FIGURE 11 that are similarly identified function in a similar manner or represent similar quantities.

In FIGURE 11, baseband video signal $V_b$ is applied to ADC 25, for sampling the signal at the sampling rate $f_s$ in response to a clock signal $f_s,ck$ developed by clock generator 27 of FIGURE 11. The sampling rate $f_s$ is selected so as to produce sample points in the sampling grid of FIGURE 2A that are spaced apart by the distance $R_1$. Thus, the spatial frequency spectrum of the digitized video signal at the output of ADC 25 is that of the one shown in FIGURE 2B with a baseband rectangular spectrum 22 and replicated rectangular spectrums 22r centered on the repeat centers C.

The digitized and sampled video signal is then applied to spatial low pass filter 26 that filters baseband spectrum 22 into diamond-shaped baseband area 23 of FIGURE 3 and filters repeat spectra 22r into diamond-shaped repeat spectra 23r.

To accomplish the reconfiguration of the filtered signal into spatial frequencies that satisfy the bandwidth requirements of the transmission channel used, the output of spatial low pass filter 26 is applied to a quincunx switch 330 that produces quincunx subsampling of the video signal in the sampling pattern illustrated in FIGURE 4A. Switch 330 passes through unmodified, to output line 91, every other one of the input samples $x_i$ obtained from low pass filter 26. This pass through is performed on a phase alternating, field-by-field basis, in response to the application of the half-rate sampling clock signal $f_s' /2,ck$ to multiplexer 230 of switch 330.

The samples $x_i$ at the output of spatial low pass filter 26 of FIGURE 11 are also applied to a coefficient multiplier 71 within switch 330 which multiplies the samples $x_i$ by the coefficient (1-2c) to develop the samples $x_j$ at the B input of multiplexer 230. By clocking the select input terminal S with the clock signal $f'_s,ck$, a stream of samples $x_i$ and $x_j$ are produced in the form illustrated in FIGURE 10A. Due to the reduced amplitude spatial carrier equivalent to the reduced amplitude carrier of FIGURE 10A, the amplitudes of the spatial frequencies in sections 1' through 4' of the replicated spectra 23r of FIGURES 4C and 4D are of reduced amplitude relative to the frequencies in baseband sections 1 through 4.

Because of quincunx sampling, the spectrum of the sampled video signal, samples $x_i$, $x_j$, at the output of switch 330, is the one shown in FIGURE 4B, having a diamond-shaped baseband spectrum 23 together with repeat spectra 23r located not only around repeat centers C' but also around repeat centers C. To obtain the rectangular spectrum 121 of FIGURE 4D at the lower horizontal cutoff frequency of $f_{mx}$, the video samples $x_i$, $x_j$ are applied to a horizontal low pass filter 150a.

In filter 150a, the samples $x_i$, $x_j$ are stored in a latch 72 clocked by the clock signal $f'_s$,ck. The clock signal $f'_s$,ck is developed from the $f'_s$ /2,ck signal by frequency doubling as in the doubler stage 31 in Figure 5. The samples are then clocked out of latch 72 to a two-stage delay comprising delay stages 73 and 74. Additionally, the samples at the output of latch 72 are multiplied by a coefficient multiplier 75 and then applied to an adder 78. The samples developed at the output of delay stage 73 are multiplied by a coefficient multiplier 76 and then applied to adder 78. The samples at the output of delay stage 74 are multiplied by coefficient multiplier 77 and then applied to adder 78. The samples at the output of adder 78 are multiplied by coefficient multiplier 79 to produce the frequency interleaved digital samples $x'_i$ of FIGURE 11. To preserve overall unity gain between the samples $x_i$, $x_j$ and the samples $x'_i$, the value of coefficient multiplier 79 is $1/(1-c)$.

The video samples $x'_i$ developed at the output of filter 150a have the frequency interleaved baseband spectrum of rectangular baseband spectrum 121 illustrated in FIGURE 4D. All the picture information of the original signal samples developed at the output of spatial low pass filter 26 is contained in the frequency interleaved spectral signal of samples $x'_i$, but rearranged so as to accommodate the narrowband transmission requirements.

The digital video samples $x'_i$ are applied to a digital-to-analog converter DAC 33 to generate an analog frequency interleaved baseband video signal having the rectangular baseband spectrum 121 of FIGURE 4D. As in FIGURE 5, this signal is then passed through a channel low pass filter 34 prior to being sent to the transmitter stage.
The frequency interleaved video signal $V_{fi}$ developed at the output of filter 34 contains the rectangular baseband spectrum 121 of FIGURE 4D.
The concept of reducing the relative amplitude of the interleaved sections to avoid the introduction of aliasing artifacts may be also beneficially used in other embodiments of the invention. Thus in embodiments employing analog processing such as that to be described with reference to FIGURES 14-17, the amplitude of the interleaved sections may be reduced by using a reduced amplitude carrier wave: then at the receiver, where complementary carrier modulation process reconstructs the original image spectrum, an increased amplitude carrier wave is used to restore the amplitude of the relocated section to its original level.

FIGURE 12 illustrates a decoder 40' in the television receiver that will reconstruct the diamond-shaped baseband spectrum 23 of FIGURE 1B from the frequency interleaved baseband video signal $V_{fi}$ producedby frequency interleaving encoder 20' of FIGURE 11. After the transmitted video signal has been received by the television receiver and processed by the front end stages, such as the tuner and IF stages, assuming transmission by way of an RF modulated broadcast carrier, and has been demultiplexed and decompressed in a MAC processor, the baseband frequency interleaved video signal $V_{fi}$ is developed at a terminal 119 of FIGURE 12. Items of FIGURE 11 and 12 that are similarly identified function in a similar manner or represent similar quantities,as do similarly identified items in FIGURES 6 and 12.

As the first step in reconstructing the diamond shaped baseband spectrum, the frequency interleaved video signal $V_{fi}$ is quincunx subsampled at the half sampling rate of $f_s/2$, in order to generate signal samples $y_i$. Due to quincunx sampling, the frequency spectrum of the signal samples $y_i$ is that of the frequency spectrum of FIGURE 4B. To perform the quincunx subsampling, while at the same time digitizing analog signal $V_{fi}$, an analog-to-digital converter ADC 125 receives frequency interleaved signal $V_{fi}$ and subsamples it in a quincunx manner in accordance with the clocking signal $f'_s/2$,ck.

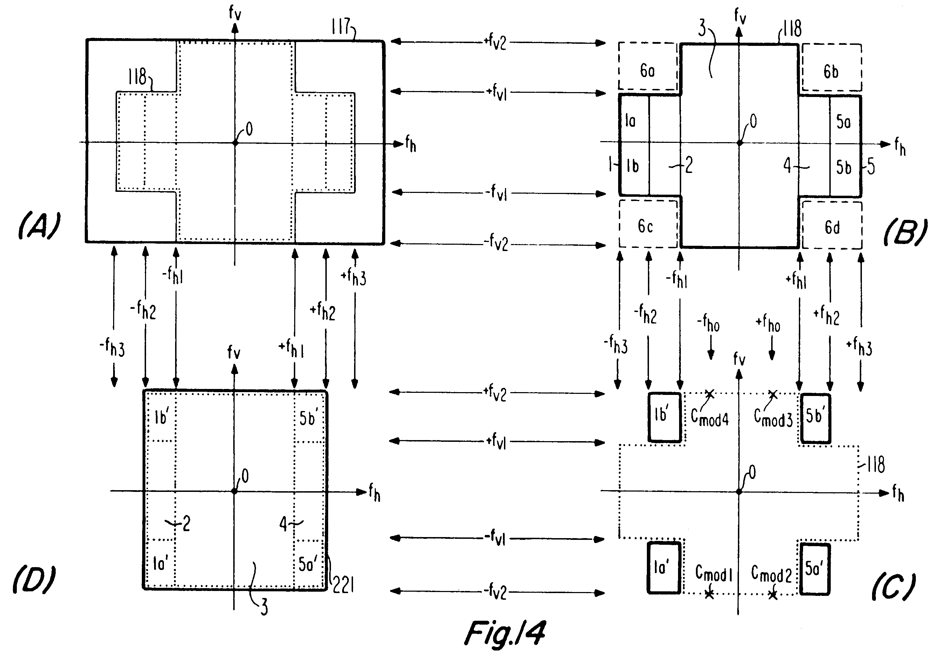

The subsampled signal $y_i$ is applied to an interpolator 13 that produces digital samples $y''_i$ at its output at an increased rate of $f_s$. A specific embodiment of interpolater 13 is illustrated in FIGURE 13, including a spatial low pass filter 26'. The function of spatial low pass filter 26' is to filter the signal samples $y_i$ to remove all the repeat spectra $23r$ of FIGURE 4B that are located about the repeat centers C'. Samples $y'_i$ at the output of spatial low pass filter 26' are coupled to the B input of a multiplexer MUX 32. The unprocessed samples $y_i$, obtained at a suitable tap of filter 26', are coupled to the A input. Digital samples $y''_i$ are developed at an $f_s$ rate at the output of MUX 32. Digital samples $y''_i$ alternate between unprocessed samples $y_i$ and interpolated samples $y'_i$ and contain the spatial frequency spectrum of FIGURE 3, including baseband spectrum 23 of FIGURE 1A.

Due to the technique, previously described, of reducing the amplitude of the modulated carrier, reconstructed sections 1a' through 4a' of FIGURE 1A contained in the samples $y''_i$ are still of reduced amplitude. To restore these frequencies and these sections to their original amplitude, the samples $y''_i$ are horizontally high pass filtered, multiplied by a gain factor of $(1-c)/c$ and then added back to the original samples $y''_i$ after these same samples $y''_i$ have been horizontally low pass filtered.

As illustrated in FIGURE 12 samples $y''_i$ at the output of interpolator 13 are coupled to a horizontal high pass filter 86 that removes horizontal spatial frequencies smaller in magnitude than $f_{mx}$. The baseband spectrum of the output of high pass filter 86 contains only sections 1a' through 4a'. The output samples of high pass filter 86 are coupled to a coefficient multiplier 81 that results in the restoration of sections 1a' through 4a' to their full amplitude.

Samples $y''_i$ at the output of interpolator 13 are also coupled to a horizontal low pass filter 83 that removes all spatial frequencies extending beyond $\pm f_{mx}$. The baseband spectrum of the output of low pass filter 83 contains only sections 1b through 4b of FIGURE 1A.

The samples at the outputs of horizontal low pass filter 83 and coefficient multiplier 81 are coupled to an adder 82 to redevelop signal samples $y''_i$ but with sections 1a' through 4a' of FIGURE 1A restored to full amplitude.

To convert samples $y''_i$ into an analog video signal, the samples are applied to digital-to-analog converter 33 that is clocked by the field-by-field, phase alternating signal $f'_s,ck$. A low pass filter 134 has a horizontal spatial frequency cutoff of $2f_{mx}$ to remove repeat spectra having horizontal frequencies that are greater in magnitude than $2f_{mx}$. The output of low pass filter 134 provides a reconstructed baseband video signal, $V_{bd}$, having the diamond-shaped baseband spectrum 23 of FIGURE 1A. The signal $V_{bd}$ also contains repeat spectra, not illustrated in FIGURE 1A, that are positioned on the vertical axis $f_y$. These vertical repeat spectra are of no importance for the purposes of this discussion, as they are attenuated by the scanning process in the television receiver.

Filter 26 of FIGURE 11 and filter 26' of FIGURE 12 perform analogous functions in frequency interleaving encoder 20' and frequency reconstructing decoder 40', respectively. Each of the two filters takes its respective signal samples and processes them to generate signal samples having diamond-shaped spectra. Thus, spatial low pass filters 26 and 26' may be similarly constructed, taking into account the fact that the input sample rate for filter 26 is twice that for filter 26'.

When the high definition television signal processing system incorporates sampling techniques, high frequency carriers are inherently introduced in the form of spectral repeat centers by means of the sampling procedure. When analog processing circuitry is used, spatial repeat spectra may be introduced, for example, by modulating an appropriately selected carrier wave with the video signal.

Great flexibility is available in selecting the spatial-temporal carriers that generate repeat centers at particular points in the spatial-temporal frequency volume. The effect of using spatial-temporal carrier generation is to reconfigure the spectrum of the image, transmitting a portion of the baseband spectrum in a different location of the spatial-temporal frequency volume.

As previously indicated, the baseband spatial-temporal frequency spectrum of a video signal maybe configured so as to enable rectangular sections of the spectrum to be interleaved. The baseband frequency spectrum used may be a cruciform-shaped region illustrated in solid-line in FIGURE 14. Such a spectrum is capable of providing improved horizontal and vertical resolution at the expense of diagonal resolution. This type of trade off may produce a more pleasing picture, taking into account the physiology of the eye and the perception of images by the visual system. Moreover, additional advantages ensue if one extracts from the baseband video spectrum, for the purpose of frequency interleaving, a spectral section of such shape and orientation so as to enable the sides of the section to be oriented parallel to the horizontal and vertical directions. Both the frequency interleaved encoding of the video signal at the transmitter and the decoding of the frequency interleaved signal at the television receiver may be readily accomplished using analog processing circuitry and a simplified filtering arrangement that is separable into a plurality of one-dimensional filters. The analog circuitry encoder modulates an appropriately selected carrier wave, and the analog circuitry decoder demodulates the received spatial-temporal frequency interleaved signal.

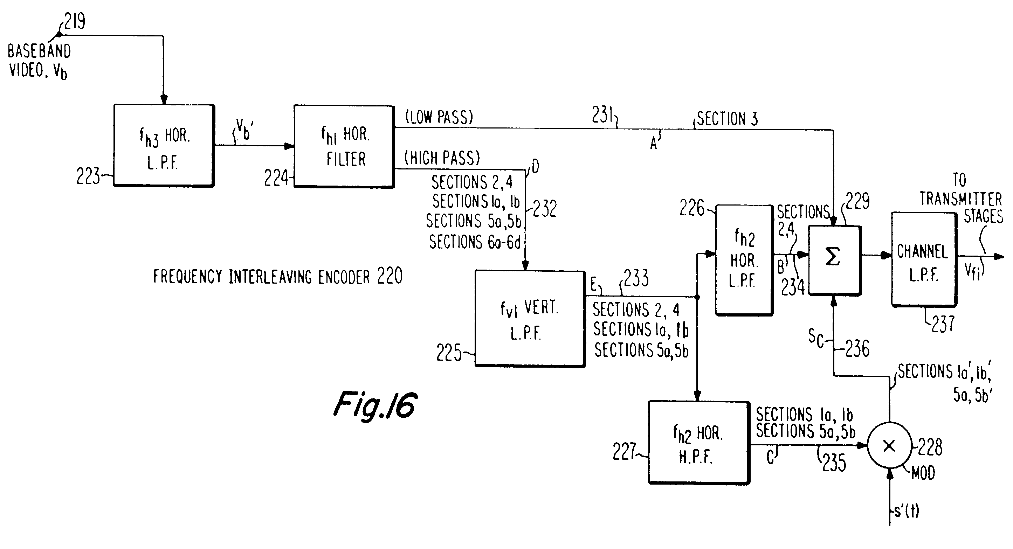

In the analog circuitry illustrated in FIGURE 16, a baseband video signal $V_b$ is developed by conventional camera and studio equipment at a terminal 219 of a frequency interleaving encoder 220.

Video signal $V_b$ may comprise the luminance signal component, by way of example, in a time division multiplexed component format, such as a multiplexed analog component or MAC format, prior to compression. The spatial-temporal frequency spectrum of video signal $V_b$ may be considered for explanatory purposes as arbitrarily encompassing the rectangular area 117 of FIGURE 14A that includes cruciform region 118.

Baseband video signal $V_b$ is coupled to a horizontal low pass filter 223 that limits the extent of the horizontal spatial frequencies of the image to the frequencies $\pm f_{h3}$ cycles per picture width (c.p.w.). Not illustrated in FIGURES 14A - D are repeat spectra having repeat centers located on the vertical axis $f_v$. These repeat spectra are inherently generated in the scanning process. However, the very same process when performed in the camera and in the television receiver causes these spectra to be attenuated.

The spatial frequency spectrum of the video signal $V'_b$, developed at the output of horizontal low pass filter 223, is the spectrum illustrated in FIGURE 14B that includes the desired cruciform region 118 and the corner regions 6a through 6d.

Assume that the transmission channel used is capable of transmitting a signal having a Nyquist area equal to that of cruciform region 118 of FIGURES 14A and 14B but is incapable of transmitting horizontal spatial frequencies greater in extent than the spatial frequency $\pm f_{h2}$. A frequency interleaving technique in accordance with an aspect of the invention may be used to take sections 1a, 1b, 5a, 5b, in cruciform region 118 of FIGURE 14B and transfer the contents of these regions next to the corners of cruciform region 118, as illustrated in FIGURE 14D The rectangular spatial frequency spectrum 221 of FIGURE 14D contains the identical spectral content as that of the original cruciform spectrum 118 of FIGURES 14D and 14B rearranged to permit transmission over a limited capacity channel.

The rearrangement is produced in the following manner by encoder 220. The filtered video signal $V'_b$ is applied to a horizontal filter 224 for the purposes of removing the unwanted spatial frequencies located in corners 6a through 6d of FIGURE 14B A low pass output signal line 231 of filter 224 develops a video signal A derived from signal $V'_b$ that contains horizontal spatial frequencies extending below $\pm f_{h1}$. Thus, signal A contains the spatial frequencies of rectangular section 3 of FIGURE 14B, A high pass output signal line 232 of filter 224 develops a video signal D derived from signal $V'_b$ that contains horizontal spectral frequencies greater in magnitude than the frequency $f_{h1}$. Thus; signal D contains the spatial frequencies of sections 1, 2, 4, 5, 6a -6d of FIGURE 14B.

Signal D on high pass output line 232 is coupled to a vertical low pass filter 225 which removes vertical spatial frequencies greater in magnitude than the frequency $f_{v1}$ cycles per picture height (c.p.h.). The output of vertical low pass filter 225 on a signal line 233 comprises a video signal E that contains the spatial frequencies of sections 1, 2, 4, 5 of FIGURE 3B. Corner sections 6a - 6d have therefore been removed from signal E.

Signal E on line 233 is coupled to a horizontal low pass filter 226 that removes horizontal spatial frequencies greater in magnitude than the frequency $f_{h2}$.The output of horizontal low pass filter 226 on signal line 234 comprises a video signal B that contains the spatial frequencies of only sections 2 and 4 of FIGURE 14B

Signal E on line 233 is also coupled to a horizontal high pass filter 227 that removes all horizontal spatial frequencies smaller in magnitude than the frequency $f_{h2}$. The output of horizontal high pass filter 227 on a signal line 235 comprises a video signal C that contains the spatial frequencies of sections 1 and 5 of FIGURE 14B. It is these sections 1 and 5 that are to be spatially modulated onto an appropriate spatial carrier signal that spatially frequency interleaves these sections into corners of cruciform region 118.

Consider an image i(x,y) that is to be transmitted by means of a raster scanning system, where, for simplicity, the temporal dimension associated with the image is omitted from consideration. In the spatial frequency domain, the transform of the image is $I(f_h, f_v)$, where $I(f_h, f_v)$ is the fourier transform of i(x,y). The image i(x,y) may be considered as a superposition of spatial sinewave gratings $S(f_h,f_v)$.

A sinewave grating of given spatial frequency and orientation may be viewed a spatial carrier having two diagonally opposed spectral centers $(+f'_h, +f'_v)$ and $(-f'_h, -f'_v)$ in the spatial frequency domain. By spatially modulating the image i(x,y) onto the spatial carrier $S(f'_h,f'_v)$, the spectrum 1-$(f_h,f_v)$ of the image is repositioned from its location referenced to the origin to each of two locations referenced to the spectral centers $(+f'_h, +f'_v)$ and $(-f'_h,-f'_v)$, respectively.

The raster scanning process maps a given image i(x,y) onto a given video signal v(t). Similarly, the scanning process maps a given spatial carrier $S(f_h,f_v)$ onto a given video carrier signal s'(t).

Each line n of the video carrier signal s(t) may be of the form $\cos 2\pi(f'_h f_\ell t + \Delta\phi_n)$, where $f\ell$ is the line scanning frequency of, illustratively, 15,734 lines per second for a system using an NTSC two-to-one interlace, or 31,468 lines per second in a double-line-rate progressive scanning system, and where $\Delta\phi_n$ is an added phase term for the nth line of video carrier signal v(t). The phase term $\Delta\phi_n$ is a function of the spatial frequency and orientation of a spatial carrier having spatial centers $(+f'_h, +f'_v)$ and $(-f'_h\text{'}-f'_v)$. By proper selection of the spatial spectral centers, the phase term $\Delta\phi_n$ may be made equal to zero for all video lines, allowing the video carrier signal s(t) to be a continuous wave signal v-(t) = $\cos 2\pi f'_h f_\ell t$.

Returning now to FIGURE 16 the video signal C on line 235 modulates a carrier signal s'(t) in a modulator 228. By proper selection of s'(t), the modulation of carrier signal s'(t) by the signal C generates a modulated signal $S_c$ that is selected to produce spectral centers $C_{mod1}$ through $C_{mod4}$ of FIGURE 14C. The positions of the four centers are the coordinates $(\pm f_{h0}, \pm f_{v2})$.

When video signal C, containing only sections 1 and 5 of FIGURE 14B modulates the video carrier s'(t), the modulated video signal $S_C$ has the spatial spectral content illustrated by the solid line rectangular sections 1a', 1b', 5a', 5b' of FIGURE 14C located adjacent the corners of cruciform region 118. Sections 1a', 1b', 5a', 5b' correspond to respective upper and lower portions 1a, 1b,5a,5b of sections 1 and 5 in FIGURE 14B.

The output of an adder 229 is the sum of video signals A, B and $S_C$. A channel low pass filter 237 removes any spuriously introduced spatial components greater in magnitude than $f_{h2}$. The output of filter 237 comprises the frequency interleaved

baseband video signal $vf_i$ that is then sent to conventional transmitter stages, such as the RF modulator stages in a broadcast transmission system.

The spatial spectral content of video signal $V_{fi}$ is illustrated in FIGURE 14D and includes section 3 obtained from video signal A, sections 2 and 4 obtained from video signal B and sections 1a', 5a' 5b' obtained from modulated video carrier signal $S_C$. Thus, by means of the frequency interleaving process, the original cruciform region 118 of FIGURE 14A is transmitted as the rectangular region 221 of FIGURE 14D.

As previously noted, by filtering the image spectrum to remove original image spectral content at the interleaved locations, artifacts will be avoided that are due to the interaction between the interleaved spectral information. These artifacts will be avoided not only when the image is stationary but even when motion occurs in the image.

At the television receiver, a decoder 340, illustrated in FIGURE 17, restores the baseband spatial frequency spectrum of incoming video signal $V_{fi}$ to its original cruciform shaped spectrum 118. After the transmitted video signal has been received by the television receiver and processed by the front end stages, such as the tuner and IF stages, assuming transmission by way of an RF modulated broadcast carrier, and has been demultiplexed and decompressed in a MAC processor, the frequency interleaved baseband video signal $V_{fi}$ representing the luminance component of a MAC signal is developed at a terminal 319 of FIGURE 17. The spatial frequency spectrum of signal $V_{fi}$ is the rectangular spectrum 221 illustrated in FIGURE 14D.

To separate the interleaved spectral components, video signal $V_{fi}$ is coupled to a horizontal filter 341. A video signal M is developed on a low pass output signal line 348 that contains only spatial frequencies smaller in magnitude than the frequency $f_{h1}$ of FIGURE 14D. Thus the spatial spectral content of video signal M is that of section 3 of FIGURE 14D.

A video signal N is developed on a high pass output signal line 345 of horizontal filter 341. The spatial frequency content of signal N contains only frequencies that are greater in magnitude than the spatial frequency $f_{h1}$. Therefore, video signal N contains the spatial frequencies of sections 2, 4 and sections 1a', 1b', 5a', 5b' of FIGURE 14D.

Signal N is coupled to a vertical filter 342. A video signal Q developed on a low pass output line 347 contains vertical spatial frequencies no greater in magnitude than the frequency $f_{v1}$. Signal Q, therefore, contains the spectral sections 2 and 4 of FIGURE 14D.

A video signal P is developed on a high pass output signal line 346 of vertical filter 342 and contains vertical spatial frequencies that are greater in magnitude than the frequency $f_{v1}$. Signal P, therefore, contains only the spectral contents of sections 1a', 1b', 5a', 5b' in the positions shown in FIGURE 14C.

The spectral contents of sections 1a', 1b', 5a', 5b' must be returned to their original locations as sections 1a, 1b, 5a, 5b adjacent the horizontal axis $f_h$ of FIGURE 15 To accomplish this result, video signal P is coupled to one input of a demodulator 343. The same carrier signal s'(t), is coupled to the other input of demodulator 343. The modulation of the carrier signal s'(t) by the video signal P produces the modulated video carrier signal $S'_p$ on a signal line 349.

The effect of the video carrier modulation of the video signal P is to produce spatial carrier modulation which introduces spectral centers $C_{dem1}$ -$C_{dem4}$ in the positions illustrated in FIGURE 15. These positions are identical to the positions of the spatial spectral centers of FIGURE 14C. The spatial spectra associated with these centers include the very same baseband spectral sections 1a, 1b, 5a, 5b in the proper baseband locations of cruciform spectral region 118 of FIGURE 15.

The modulation process also introduces undesired spectral sections, not illustrated in FIGURE 15, of horizontal spatial frequencies smaller in magnitude than $f_{h2}$. A horizontal high pass filter 352 having a cutoff frequency of $f_{h2}$ receives video signal $S'_p$, removes the undesired spectral sections and develops a video signal $S_p$ on a line 351 that contains only baseband spectral sections 1a, 1b, 5a, 5b. As indicated previously, vertical repeat spectra, not illustrated in FIGURE 15 are of no importance for the purposes of this discussion, since they are attenuated by the scanning process in the television receiver.

To reconstruct the cruciform baseband spectral region 118 of FIGURE 14A video signals M, Q, and $S_p$ are summed in an adder 344 to develop at an output signal line 350 a reconstructed baseband video signal $V''_b$, representing luminance channel information. The spatial frequency spectrum of baseband video signal $V''_b$ is the desired cruciform shaped spectrum 118.

By making certain simplifying selections for the locations of the spatial spectral centers, $(\pm f_{ho}, \pm f_{v2})$, the video carrier signal s'(t) may comprise a continuous wave sinusoidal signal. For example, to generate an interleaved spectrum 221 in FIGURE 14D of rectangular shape, assume that:

$$f_{h3} = 4f_{ho}, \; f_{h2} = 3f_{ho}, \; f_{h1} = 2f_{ho}, \; f_{v2} = 2f_{v1}.$$

Select $f_{h2}$ to be the greatest horizontal spatial frequency that is an integral multiple m of half-cycles per picture width, consistent with a given transmission channel bandwidth of $f_{BN}$ cycles per second. Then, $f_{h2} \sim f_{BN}/f_\ell$, and $f_{ho} \sim f_{BN}/3f_\ell$. A continuous wave video carrier s'(t) that generates spatial spectral centers $C_{mod1}$ through $C_{mod4}$ of FIGURE 14C, having a horizontal spatial frequency of $f_{ho}$ in magnitude is:

$$s'(t) = \cos 2\pi f_{ho}f_\ell t \sim \cos(2\pi f_{BN}t/3).$$

Assuming a two-to-one interlace is used in raster scanning the image, the video carrier s'(t) establishes vertical spatial frequencies of the spatial spectral centers. The magnitude $f_{v2}$ is: $f_{v2} = N_{FR}/4$ cycles per picture height, where $N_{FR}$ equals the number of scan line per picture height (or frame), e.g., $N_{FR} = 525$ for an NTSC scanning format.

As a specific example consider a MAC system using an NTSC two-to-one scanning interlaced format of 525 scan lines per picture frame, 29.97 frames per second, and a horizontal scanning rate of $f_\ell = 15,734$ lines per second. The video transmission channel bandwidth for the MAC signal is 5.61 megahertz. Assuming a 4 to 3 compression ratio for the luminance component of the MAC signal, then the bandwidth $f_{BN}$ of the MAC channel in relation to the uncompressed luminance component is 4.21 megahertz. The horizontal spatial frequency $f_{h2}$ is the closest frequency to $f_{BN}/f_\ell$ that is an integral multiple of half-cycles or $f_{h2} = 267\frac{1}{2}$ cycle per picture width. The frequency f(t) of the video carrier wave s'(t) used for spatial frequency interleaving purposes is f(t) = $f_{h2}f_\ell/3 \sim f_{BN}/3 = 1.40$ megahertz. The horizontal spatial frequency $f_{ho}$ of the spectral centers is $f_{ho} = f_{h2}/3 = 89.2$ cycles per picture width. The vertical spatial frequency $f_{v2}$ of the spectral centers is $f_{v2} = N_{FR}/4 = 525/4 = 131\frac{1}{4}$ cycles per picture height. The increase in horizontal spatial resolution is by an amount: $(f_{h3} - f_{h2})/f_{h2} = 1/3$. In other words, by using the inventive spatial-temporal frequency interleaving techniques just described, the horizontal spatial frequencies that can be transmitted for a given channel bandwidth is increased by one-third.

The frequency interleaving techniques just described generates a spatial frequency interleaved video signal $V_{fi}$ of FIGURE 16 that can be compatibly processed by television receivers that do not incorporate a decoder, such as decoder 340, in their video processing stages. The artifacts introduced into the displayed picture is a fine, checkerboard dot pattern due to the display on the screen of the television receiver of the spatial frequency interleaving video carrier s'(t) and the modulated sections 1a' through 5a' of FIGURE 14C. Such artifacts, because they are produced in only the relatively high spatial frequency regions of the displayed picture are not significantly noticeable by the viewer.

In the simplified example, discussed previously, where the frequency of the video carrier signal s'(t) was selected to be an integer multiple of one-half the horizontal line frequency, the phase of the video carrier at any given instant is 180 degrees out-of-phase with the phase of the video carrier one frame time later. The artifacts introduced when processing the interleaved video signal without using a decoder tends to include line crawl along edges of the picture. Such line crawl may be eliminated, if so desired, by inverting the phase of video carrier s'(t) in alternate frames.

Several advantages ensue by using a cruciform shaped baseband video signal for frequency interleaving purposes and rectangular sections as the interleaved sections. Encoder 220 of FIGURE 16 and decoder 340 of FIGURE 17 may use relatively simple analog processing stages rather than digital processing stages. Relatively uncomplicated separable horizontal and vertical filters may be used in both the encoder and decoder. The reduced filter complexity facilitates the use of carrier signals selected with relatively few constraints imposed on the choice of signals. The use of rectangular regions 1a, 1b, 5a, 5b, of FIGURES 14B and 15 for the interleaving process substantially reduces visual artifacts in the displayed picture, because separable horizontal and vertical filters approaching ideal filters are readily realizable.

In general the use of nonseparable filters with similar roll off characteristics to separable filters requires that substantially more arithemtic operations be performed. For example, an 11 x 11 nonseparable filter nominally requires the use of approximately 121 filter coefficients (implemented via multiply and add operations). In contrast, a separable filter arrangement, comprising two nth order one-dimensional filters requires the use of only 22 coefficients, approximately, thus resulting in a significant reduction in hardware.

If digital processing circuitry is used to sample a baseband video signal at a sampling rate $f_s$, then equivalent modulation by the aforementioned carrier s'(t) may be accomplished using a memory to store values of a carrier term: $\cos(2\pi f_{mod}t)$, developed over one cycle, wherein each value is separated in time from an adjacent value by an amount $1/f_s$, and where $f_{mod}$ is a carrier frequency. The samples of the baseband video signal are then multiplied by the corresponding values of the carrier term in a combinatorial multiplier to obtain samples of a modulated carrier video signal that contains the spatial-temporal frequency interleaved spectrum of FIGURE 14D.

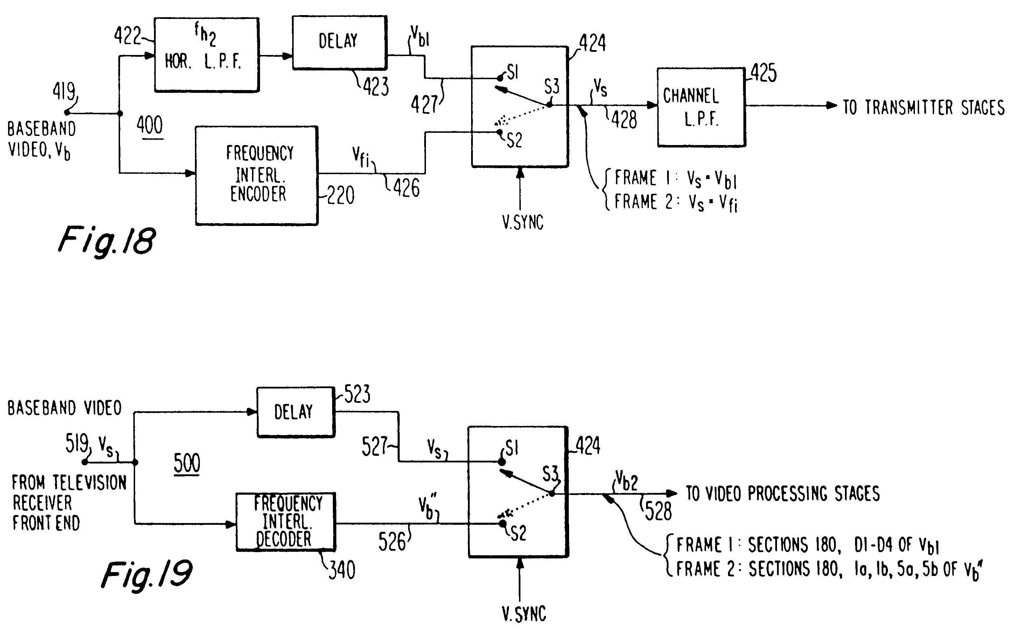

Having regard to the foregoing description, and in general, one may again state that spatial-temporal frequency interleaving techniques substitute one piece of spatial information, such as information contained in the high horizontal frequencies, in place of another piece of information, such as information contained in diagonal frequencies, both of which are relatively high frequency spatial information. FIGURES 18-24 relate to a system in which different pieces of spatial information, such as diagonal and high horizontal frequency information, are transmitted to the receiver by alternating or temporally multiplexing transmission of the pieces of information at a given rate such as at the frame rate. Thus, the video signal of an image containing diagonal frequency information is transmitted in one frame, while the video signal of an image containing high horizontal frequency information is transmitted in the alternate frame. Assuming a frame rate of 30 Hertz, the visual artifacts introduced into such a transmission system is a half-frame rate, 15 Hertz flicker.

In video signal generator 400 of FIGURE 18, a baseband video signal $V_b$ is developed by conventional camera and studio equipment at a terminal 419. Video signal $V_b$ may comprise a two-to-one interlaced luminance signal component, by way of example, in a time division multiplexed component format, such as a conventional multiplexed analog component or MAC format, prior to compression.

The spatial-temporal frequency spectrum of video signal $V_b$ may be considered for explanatory purposes as arbitrarily encompassing the rectangular area 117 of FIGURE 22A that includes, similarly to FIGURE 14A, a cruciform region 118. As explained in connection with FIGURE 14A, the spectral contents of interest are those encompassed within cruciform region 118, including high horizontal spatial frequency sections 1a, 2a, 5a, 5b. Assume as before, however, that the channel utilized to transmit video signals to a receiver, such as an RF broadcast channel, is of limited capacity and is not capable of transmitting video signals having horizontal spatial frequencies greater in magnitude than $f_{h2}$ of FIGURE 22A. Video signal generator 400 of FIGURE 18 may use a frequency interleaving encoder 220 to reconfigure the spatial spectrum of video signal $V_b$ intospectrum 221 of FIGURE 22B, similar to FIGURE 14D. The high horizontal sections 1a, 1b, 5a, 5b of spectrum 118 of FIGURE 22A have been positioned next to the corners of the cruciform spectrum to respectively form the complementary sections 1a', 1b' 5a', 5b' of rectangular spectrum 221 of FIGURE 22B. Rectangular spectrum 221 contains horizontal spatial frequencies of magnitude no greater than the aforementioned frequency $f_{h2}$.

To accomplish the spectral reconfiguration, video signal Vb, a frequency interleaving encoder 220 which may be similar to that described in FIGURE 16, produces a frequency interleaved video signal $V_{fi}$ on a signal line 426. The spatial frequency spectrum of video signal $V_{fi}$ is the previously described rectangular spectrum 221, illustrated in FIGURE 14D, and again illustrated in FIGURE 22A. The signal $V_{fi}$ includes high horizontal spatial frequencies, moved or interleaved into the corners of spectrum 221 as sections 1a', 1b', 5a', 5b'. Video signal $V_{fi}$ therefore does not contain any diagonal information.

Baseband video signal $V_b$ is also coupled to a horizontal low pass filter 422 which removes from the video signal spatial frequencies that extend beyond $\pm f_{h2}$. After suitable delay in a delay unit 423, a filtered video signal $V_{b1}$ is developed on a signal line 427 having the spatial frequency spectrum 321 illustrated in FIGURE 22B. The spectrum of video signal $V_{b1}$ includes diagonal spatial frequencies D1 through D4 located in the same corners as those in which the high horizontal spatial frequencies are located for the frequency interleaved signal $V_{fi}$. Comparing FIGURES 22B and 22A, one notes that both signals have a common spectral section 180. Where the spectral content of the two signals differs is in the corners where signal $V_{b1}$ favors diagonal spatial frequencies, and signal $V_{fi}$ favors high horizontal spatial frequencies.

Video signal $V_{b1}$ is coupled to a contact S1 of a single-pole-double-throw switch 424. Video signal $V_{fi}$ is coupled to a contact S2. A vertical sync signal, conventionally derived, is coupled to switch 424 to enable the arm of the switch to move between contacts S1 and S2 at a frame rate. During Frame 1, for example, video signal $V_{b1}$ is coupled to pole S3 of switch 424, and during Frame 2, the alternate frame, video signal $V_{fi}$ is coupled to pole S3. Video signal $V_s$ developed on a signal line 428 is a luminance signal that comprises video signal $V_{b1}$ during Frame 1 and video signal $V_{fi}$ during the alternate frame, Frame 2. The spatial frequency spectrum of video signal $V_s$, therefore, alternates between that of spectrum 321 of FIGURE 22B during Frame 1 and that of spectrum 221 of FIGURE 22A during Frame 2.

Video signal $V_s$, after being filtered by a channel low pass filter 425, is then sent to conventional transmitter stages, such as the RF modulating stages in a broadcast transmission system.

FIGURE 19 illustrates a video signal processor 500 in a television receiver that takes the baseband, temporally multiplexed video signal $V_s$ and generates an extended spatial frequency video signal $V_{b2}$ that contains both diagonal spatial frequency information and high horizontal spatial frequency information, but not in the same frame.

After the transmitted video signal has been received by the television receiver and processed by the front end stages, such as the tuner and the IF stages, assuming transmission by way of an RF modulated broadcast carrier, and has been demultiplexed and decompressed in a MAC processor, the temporally multiplexed, baseband video signal $V_s$ representing the luminance component of a MAC signal is developed at a terminal 519 of FIGURE 19.

In FIGURE 19 video signal $V_s$ is coupled to a frequency interleaved decoder 340, such as that of FIGURE 17 to develop a video signal $V''_b$ on a signal line 526. The spatial frequency spectrum of video signal $V''_b$ during alternate frames corresponding to the aforementioned Frame 2 is the reconstructed spatial frequency spectrum 118, illustrated in FIGURE 14A.

Video signal $V''_b$ is coupled to contact S2 of switch 424 and video signal $V_s$ is coupled to contact S1 via a delay 523 along a signal line 527. Switch 424 of FIGURE 19 is constructed and operated identically to switch 424 of FIGURE 18. During Frame 1, therefore, the arm of switch 424 is coupled to contact S1 and passes through video signal $V_s$ to pole S3. During Frame 1, video signal $V_s$ comprises the aforementioned video signal $V_{b1}$ of FIGURE 18 that contains diagonal spatial frequencies D1 through D4.

Video signal $V_{b2}$ developed on signal line 528 comprises, during Frame 1, video signal $V_{b1}$. During Frame 2, the arm of switch 424 is coupled to contact S2, to pass through video signal $V''_b$ to signal line 528. During Frame 2, therefore, video signal $V_{b2}$ comprises reconstructed video signal $V''_b$.

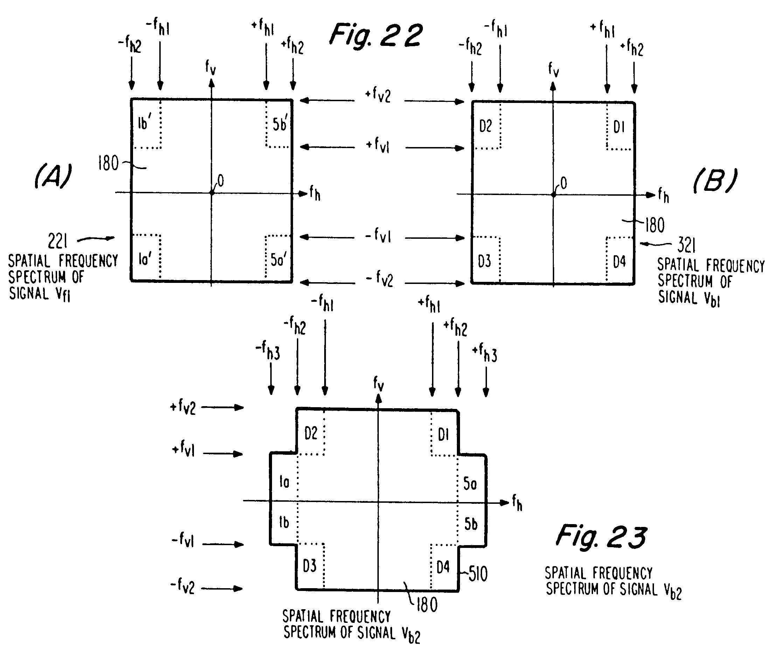

Video signal $V_{b2}$ comprises a luminance signal that contains the spatial frequency spectrum 510 illustrated in FIGURE 23. Spatial frequency spectrum 510 comprises center section 180 that is common to both reconstructed video signal $V''_b$ and video signal $V_{b1}$. During Frame 1, spectrum 510 includes diagonal frequency sections D1 through D4 but not high horizontal frequency sections 1a, 1b, 5a, 5b. During Frame 2, spectrum 510 includes high horizontal frequency sections 1a, 1b, 5a, 5b, but not diagonal frequency sections D1 through D4.

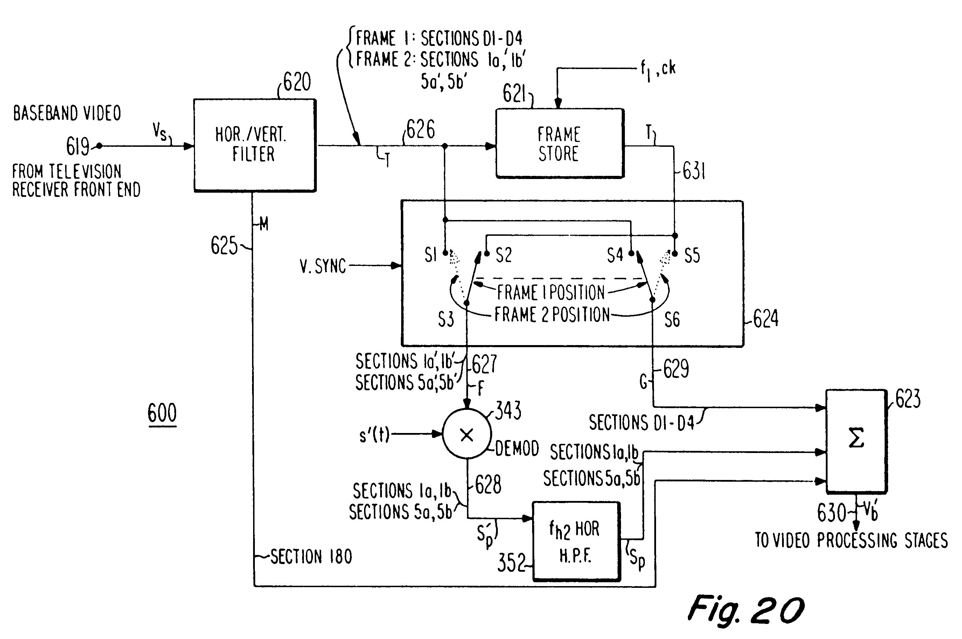

When using video processor 500 of FIGURE 2 to obtain video signal $V_{b2}$, containing spatial frequency spectrum 510 of FIGURE 23, a 15 Hertz flicker is introduced into the diagonal spatial frequency content of the displayed picture and into the high horizontal spatial frequency content. Video processor 600 of FIGURE 20 illustrates another embodiment of the invention that produces an extended spatial frequency video signal $V'_{b2}$ from the video signal $V_s$ such that $V'_{b2}$ has the same spatial frequency spectrum 510 but does not have a 15 Hertz flicker.

In FIGURE 20 the temporally multiplexed video signal $V_s$ developed at a terminal 619 is coupled to a horizontal and vertical filter 620 that separates the high spatial frequencies of the signal $V_s$ from the low spatial frequencies. On an output line 625, a signal M is developed having a spatial frequency content that comprises common section 180 of the spectrum of the signals $V_{fi}$ and $V_{b1}$ of FIGURES 22A and 22B. On an output line 626, a signal T is developed that contains the high spatial frequency content of the signal $V_s$. During Frame 1 signal T contains the diagonal spatial frequencies of sections D1 through D4 of FIGURE 22B and during Frame 2 signal T contains the high horizontal spatial frequencies of section 1a', 1b', 5a', 5b' of FIGURE 22A.

Signal T is coupled to a frame store 621 to produce a frame delayed output on a signal line 631 that provides access in two adjacent frames to diagonal sections D1 through D4 and frequency interleaved high horizontal sections 1a', 1b', 5a', 5b'.

Frame store 621 is clocked at a frequency $f_1$ by the clock signal $f_1$,ck. The sampling frequency $f_1$ and the pixel capacity of frame store 621 is such as to provide full resolution out to horizontal spatial frequencies $\pm f_{h2}$ and vertical spatial frequencies $\pm f_{v2}$.

The undelayed signal T developed on signal line 626 and the frame delayed signal T developed on signal line 631 are coupled to a double-pole-double-throw switch 624. The two arms of switch 24 are ganged so as to simultaneously switch between their respective contact terminals at a frame rate. During Frame 1, for example, the arm of pole S3 makes contact with terminal S2 and the arm of pole S6 makes contact with terminal S4. During the alternate frame, Frame 2, the arm of pole S3 makes contact with terminal S1 and the arm of pole S6 makes contact with terminal S5. Signal line 626 is coupled to terminals S1 and S4, and signal line 631 is coupled to terminals S2 and S5.

During operation, switch 624 temporally demultiplexes the diagonal frequency sections D1 through D4 of signal T from the interleaved high horizontal frequency sections 1a', 1b', 5a', 5b' to develop a signal F on a line 627 coupled to pole S3 and a signal G on a line 629 coupled to pole S6. Signal F contains only the interleaved high horizontal frequency sections 1a', 2b', 5a', 5b' during Frame 2, when these sections appear in input video signal $V_s$, and, due to operation of the frame store, also during Frame 1 when diagonal sections D1 through D4 appear in video signal $V_s$. Similarly, signal G contains only the diagonal frequency sections D1 through D4 during Frame 1 when these sections appear in input video signal $V_s$ and, due to operation of the frame store, also during Frame 2 when the interleaved high horizontal frequency sections appear in video signal $V_s$.

Signal F is coupled to a modulator 343. A carrier wave signal s'(t) is also coupled to modulator 343 to produce a carrier demodulated signal $S'_P$ on a signal line 628. A high pass filter 352 removes undesired spectral sections having horizontal spatial frequencies smaller in magnitude than $f_{h2}$. As already explained, due to the demodulation process, the spatial frequency spectrum of signal $S_P$ at the output of filter 352 is the frequency reconstructed high horizontal sections 1a, 1b, 5a, 5b of FIGURE 23 Signals M, $S_P$ and G are summed in an adder 623 to produced extended spatial frequency video signa $V'_{b2}$ on signal line 630, containing spatial frequency spectrum 510, illustrated in FIGURE 23 wherein both diagonal spatial frequencies and high horizontal spatial frequencies are simultaneously contained in the video signal during any given frame.

In video signal processor 600 of FIGURE 20 both the diagonal spatial frequency sections D1 through D4 and the high horizontal spatial frequency sections 1a, 1b, 5a, 5b of FIGURE 23 are simultaneously contained in extended video signal $V'_{b2}$. In contrast, video signal processor 500 of FIGURE 19 produces an extended video signal $V_{b2}$ that alternately contains, on a frame-by-frame basis, the diagonal spatial frequencies and the high horizontal spatial frequencies.

Video signal processor 600 is not subject to a 15 Hertz flicker of the diagonal and high horizontal frequency information. However, because this information is repeated in both Frames 1 and 2, other artifacts may be introduced, such as misregistration of the diagonal and/or high frequency horizontal spatial frequencies on moving objects.

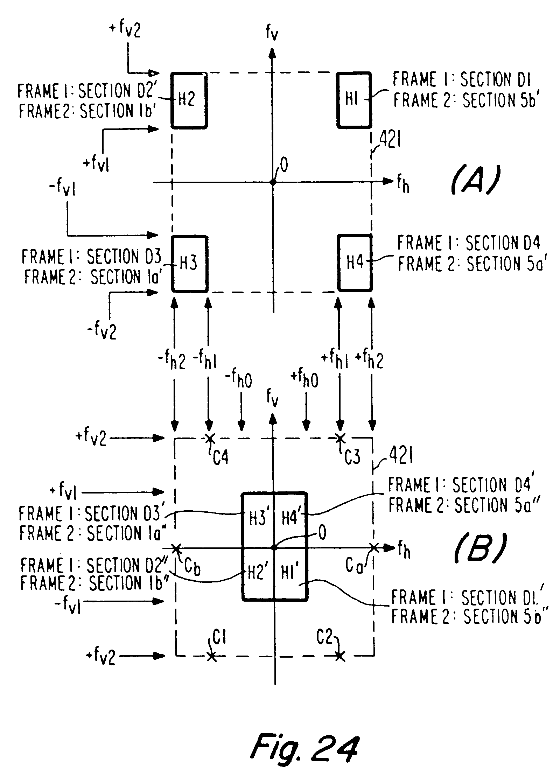

FIGURE 24A illustrates the spatial frequency spectrum of signal T at the output of horizontal vertical filter 620 of FIGURE 20. Sections H1 through H4 are the high spatial frequency sections that comprise either diagonal sections D1 through D4 during Frame 1 or high horizontal frequency sections 1a', 1b', 5a', 5b' during Frame 2. Sections H1 through H4 are spaced from the origin at locations corresponding to the corner locations of spectrums 221 and 321 of FIGURES 22A and 22B. However, unlike spectrums 221 and 321, the spatial frequency spectrum of signal T of FIGURE 24A is devoid of any information inside dashed-line rectangle 421 other than the information contained in Sections H1 through H4.

Because the range of spatial frequencies in the horizontal direction is the relatively narrow range $\Delta f_h = f_{h2} - f_{h1}$, a full resolution frame store, such as frame store 621 of FIGURE 20, is not required to resolve the spatial frequencies contained in sections H1 through H4. Similarly, because vertical spatial frequencies lower than $f_{v1}$ are absent from the spectrum of signal T, frame store 621 has more line storage capacity than is needed to resolve the range of vertical spatial frequencies $\Delta f_v = f_{v2} - f_{v1}$.

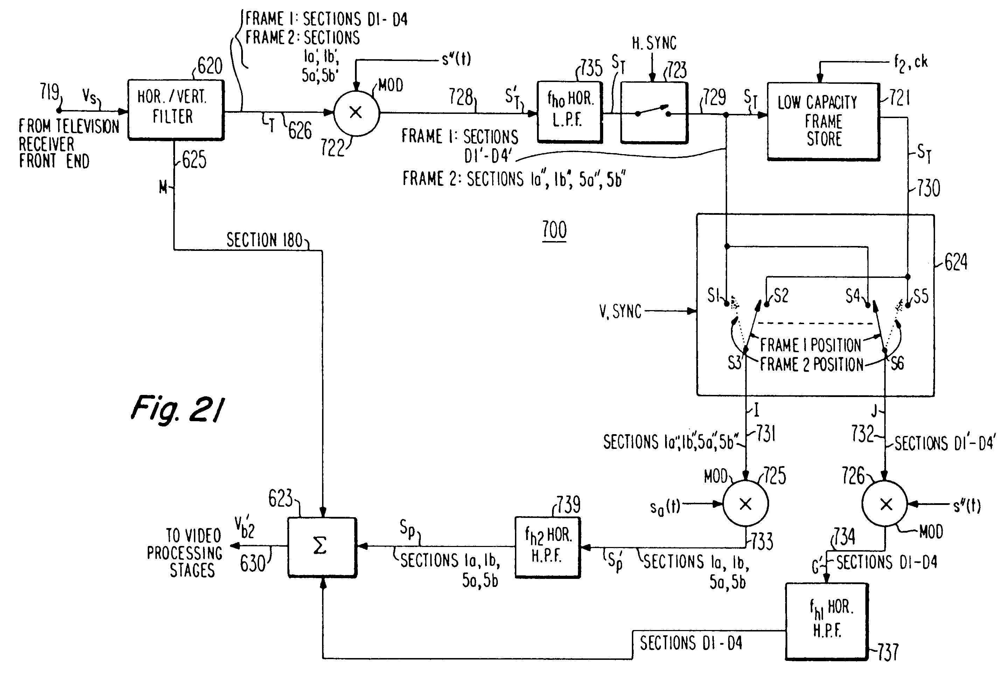

In accordance with another aspect of the invention, an extended spatial frequency video signal processor 700, illustrated in FIGURE 21, may be used in conjunction with a low capacity frame store 721. In FIGURE 21 the temporally multiplexed video signal $V_s$, developed at terminal 719, is coupled to horizontal and vertical filter 620 for developing one line 626 signal T containing the spatial frequency spectrum illustrated in FIGURE 24A and for developing on signal line 625 signal M containing the spatial frequency spectrum of section 180 of FIGURE 22A and 22B.

Signal T is coupled to one input of a modulator 722. A carrier wave signal s''(t) is coupled to the other input of the modulator. Modulator 722 produces an amplitude modulation of carrier signal s''(t) by signal T. The amplitude modulated carrier signal $S'_T$ developed on a line 728 has the spatial frequency spectrum illustrated in FIGURE 24B. Due to the modulation process, repeat centers in the spatial frequency domain are introduced that include repeat centers C1 through C4 adjacent origin O. Only repeat centers C1 through C4 are illustrated in FIGURE 24B as they are the repeat centers of importance for the purposes of this discussion. The locations of repeat centers C1 through C4 are chosen so as to move sections H1 through H4 of FIGURE 24A into new positions about origin O to form corresponding spatial frequency sections H1' through H4' of FIGURE 22B A low pass filter 735 removes undesired spectral sections, not illustrated in FIGURE 22B having horizontal spatial frequencies greater in magnitude than $f_{h0}$, to develop at the filter output the amplitude modulated carrier signal $S_T$.

Because the high frequency spatial information sections H1' through H4' are grouped near origin O, a relatively low capacity frame store 721 may be used to sample signal $S_T$ that contains the relocated spectrum of FIGURE 22B The horizontal sampling rate $f_2$ of the clocking signal $f_{2,ck}$ for frame store 721 is of a lower frequency than the corresponding frequency $f_1$ of full resolution frame store 621 of FIGURE 20.

In addition, the lower vertical spatial frequency resolution of signal $S_T$ permits one to omit entire lines of samples. To omit lines of samples, signal $S_T$ at the output of filter 735 is coupled to low capacity frame store 721 via a switch 723 controlled by horizontal sync signals. If, for example, the vertical spatial resolution contained in signal $S_T$ is half that contained in signal T, then switch 723 passes through only every other horizontal line.

Signal $S_T$ developed on line 729 at the output of switch 723 and the frame delayed signal $S_T$ developed on line 730 at the output of low capacity frame store 721 are coupled to the double-pole-double-throw switch 624 that operates identically to switch 624 previously described with respect to the circuit of FIGURE 20. A signal I developed on line 731 coupled to pole S3 of switch 624 contains high horizontal spatial frequency sections 1a'', 1b'', 5a'', 5b'' of FIGURE 24B A signal J developed on line 732 coupled to pole S6 contains diagonal spatial frequency sections D1' through D4' of FIGURE 24B.

Signal J is coupled to one input of a modulator 726. Carrier wave signal s''(t), previously referred to, is coupled to the other input of modulator 726. The modulated signal G' developed on line 734 contains the reconstructed diagonal spatial frequency sections D1 through D4, located in their proper corner positions, illustrated in FIGURE 23. Additional undesired low frequency spectral sections, not illustrated, are removed by a low pass filter 737 having a cutoff frequency of $f_{h1}$ to develop a signal G on a line 738 that contains only diagonal spatial frequency sections D1 through D4.

Signal I is coupled to one input of a modulator 725. A carrier wave signal $S_a(t)$ is coupled to the other input of the modulator to develop the signal $S'_p$ on a line 733. Carrier wave signal $S_a(t)$ is chosen to produce repeat spectra that have repeat centers $C_a$ and $C_b$ located on the horizontal axis $f_h$ in the positions illustrated in FIGURE 24B. Only repeat centers $C_a$ and $C_b$ are illustrated in FIGURE 24B, as they are the only repeat centers of importance in this discussion.

By having repeat centers $C_a$ and $C_b$ located as illustrated, sections 1a'', 1b'', 5a'', 5b'' are moved from their locations adjacent origin O to locations adjacent repeat centers $C_a$ and $C_b$. Thus, the high horizontal spatial frequency information of sections 1a, 1b, 5a, 5b is restored to its proper location in the spatial frequency domain, at the locations illustrated in FIGURE 23. To remove undesired lower frequency spectral sections, signal $S'_p$ is filtered in a high pass filter 739 having a cutoff frequency $f_{h2}$ to develop signal $S_P$ on a line 740 having only the spectral sections 1a, 1b, 5a, 5b.

Signals M, $S_P$ and G are summed in adder 623 to develop on line 630 the extended spatial frequency video signal $V'_{b2}$ having the spatial frequency spectrum 510 of FIGURE 23 that includes both diagonal spatial frequency information and high horizontal spatial frequency information.

It should be understood that time-multiplexing spatial frequency spectra such as described may be extended to multiplexing arrangements other than multiplexing, on a frame alternating basis, the spatial frequency spectrums 221 and 321 of 22A and 22B. For example, a time-multiplexing scheme may be provided that transmits diagonal spatial frequency information, high horizontal spatial frequency information, and high vertical spatial frequency information. During Frame 1, for example, diagonal spatial frequency information is transmitted; during Frame 2, high horizontal spatial frequency information is transmitted; and during Frame 3, high vertical spatial frequency information is transmitted. Furthermore, the time-multiplexing may be performed on a field-by-field basis rather than a frame-by-frame basis. In each of the schemes, tradeoffs must be considered between introducing flickering artifacts, introducing spatial artifacts, and introducing motion artifacts.

It will be appreciated that in receivers of MAC type transmissions, the extended spatial frequency luminance signal provided by the described decoders and the chrominance signal components generated by a MAC processor not illustrated in the FIGURES, are matrixed and supplied to the picture tube driver stages for display of the high definition picture content contained in these signals. Although the frequency interleaving techniques have been described by way of example for the luminance signal component of a MAC signal, similar frequency interleaving techniques may be used to extend the spatial frequencies in the chrominance signal components or in other signal formats.

**Claims**

1. Apparatus for generating a video signal having different two-dimensional spatial frequency spectrums for transmission in a single channel, characterized by:

   means (Fig. 18) for receiving an input video signal ($V_{b2}$ of Fig. 23) having an associated spatial frequency spectrum (510);

   means (422) for spatially filtering said input video signal to generate a first filtered video signal ($V_{b1}$) which preserves a first (D1-D4 of Fig. 22B) spatial spectral region of said input video signal at the expense of a second (1a,1b,5a,5b) spatial spectral region;

   means (220) for spatially filtering said input video signal to generate a second filtered video signal ($V_{fi}$) which preserves said second region at the expense of said first region; and

   means (424) responsive to the two filtered video signals for generating an output video signal ($V_s$) in said single channel which is switched by a control signal (V. SYNC) between the two spatially filtered video signals.

2. A decoder (Fig. 19) which receives the output video signal of Claim 1 after transmission through said single channel and generates a reconstructed video signal (on line 528) having associated therewith both said first and second spatial spectral regions.

Fig. 1B

Fig. 1A

Fig. 3

*Fig. 2A*

*Fig. 2B*

$R_2 = 1/N_y = 1/(2f_{my})$

$R_1 = 1/N_x = 1/(4f_{mx})$

*Fig. 4A*

*Fig. 4B*

$N_2 = 1/N_y = 1/(2f_{my})$

$R_1 = 1/N_x = 1/(4f_{mx})$

EP 0 489 713 A2

EP 0 489 713 A2

**Fig. 4C**

$f_y$

$-2f_{mx}$  $-f_{mx}$  $f_{mx}$  $2f_{mx}$

23r  2'  C'  1'  23  2'  C'  1'  23r
3'  4'  3'  4'
2  0,1
3  4
C'  C'
2'  1'  2'  C'  1'
3'  4'  3'  4'
$f_x$
23r  23r

**Fig. 4D**

$f_y$

$-2f_{mx}$  $-f_{mx}$  $f_{mx}$  $2f_{mx}$

$f_{my}$  C'  4a'  3a'  1a  C'
4b'  3b'  23
2a  2b  1b  3b'
$f_x$
3a  3b  4b  4a
$-f_{my}$  1b'  1a'  2a'  2b'  C'
C'  121

**Fig. 5**

BASEBAND VIDEO $V_b$

19 — ADC (25) — SPATIAL L.P.F. (26) — QUINCUNX SWITCH (30) — $X_i$ — HOR. L.P.F. (50a) — $X_i$ / $X_i'$ — MUX (32) A B S — $X_i''$ — DAC (33) — CHANNEL L.P.F. (34) — $V_{fi}$ — TO TRANSMITTER STAGES

$f_s$, CK

$-f_s/2$, CK

F.F. (28) — MUX (29) S A B

V, CK

CK. GEN. (27)

$+f_s/2$, CK    $-f_s/2$, CK

ENCODER 20

X 2 (31)

$f_s'$, CK

12

$X_i$

Fig. 6

Fig. 7

Fig. 8

Fig. 13

Fig. 9A

Fig. 9B

Fig. IOA

Fig. IOB

EP 0 489 713 A2

*Fig. 11*

*Fig. 12*

Fig.14

EP 0 489 713 A2

*Fig.17*

FROM TELEVISION RECEIVER FRONT END

319

$V_{fi}$

BASEBAND VIDEO

$f_{h1}$ HOR. FILTER — 341

(HIGH PASS) 345

SECTIONS 2,4,
SECTIONS 1a', 1b', 5a', 5b'

N

$f_{v1}$ VERT. FILTER — 342

(HIGH PASS) 346

SECTION 1a', 1b', 5a', 5b'

P

s'(t)

× — 343

DEMOD

SECTIONS 1a, 1b, 5a, 5b

$S'_p$

118

(LOW PASS)

M

348

FREQUENCY INTERLEAVED DECODER 340

(LOW PASS)

Q — 347

SECTIONS 2,4

SECTION 3

349

$f_{h2}$ HOR. H.P.F. — 352

351 SECTIONS 1a, 1b, 5a, 5b

$S_p$

TO VIDEO PROCESSING STAGES

350

$V_b''$

Σ

344

*Fig.15*

$f_v$

$+f_{v2}$ →

$C_{dem3}$  $C_{dem4}$

118

$+f_{v1}$ →

1a   5a

1b   5b

$-f_{v1}$ →

$C_{dem2}$   $C_{dem1}$

0

$f_h$

$-f_{v2}$ →

$-f_{h3}$ $-f_{h2}$ $-f_{h1}$ $-f_{h0}$   $+f_{h0}$ $+f_{h1}$ $+f_{h2}$ $+f_{h3}$

EP 0 489 713 A2

27

Fig.16

FREQUENCY INTERLEAVING ENCODER 220

EP 0 489 713 A2

Fig.18

422 — $^{f_{h_2}}$ HOR. L.P.F.

DELAY 423

$V_{bl}$ 427

419 BASEBAND VIDEO, $V_b$

400

FREQUENCY INTERL. ENCODER 220

$V_{fi}$ 426

424 S1 S3 S2

$V_s$ 428

V.SYNC

CHANNEL L.P.F. 425

TO TRANSMITTER STAGES

{ FRAME 1: $V_s = V_{bl}$
FRAME 2: $V_s = V_{fi}$

Fig.19

BASEBAND VIDEO

DELAY 523

527 $V_s$

519, $V_s$

FROM TELEVISION RECEIVER FRONT END

500

FREQUENCY INTERL. DECODER 340

$V_b''$ 526

424 S1 S3 S2

$V_{b2}$ 528

V.SYNC

TO VIDEO PROCESSING STAGES

{ FRAME 1: SECTIONS 180, D1-D4 OF $V_{bl}$
FRAME 2: SECTIONS 180, 1a, 1b, 5a, 5b OF $V_b''$

EP 0 489 713 A2

29

Fig. 20

Fig. 21

EP 0 489 713 A2

Fig. 22

(A)

221 — SPATIAL FREQUENCY SPECTRUM OF SIGNAL $V_{f1}$

(B)

321 — SPATIAL FREQUENCY SPECTRUM OF SIGNAL $V_{b1}$

Fig. 23

SPATIAL FREQUENCY SPECTRUM OF SIGNAL $V_{b2}$

EP 0 489 713 A2

Fig. 24